# EUROPEAN PATENT SPECIFICATION

(11) **EP 4 457 457 B1**
(45) Date of publication and mention of the grant of the patent: **10.12.2025**
(21) Application number: 22748107.4
(22) Date of filing: 25.07.2022
(51) Int. Cl.: F16M 11/32, F16B 7/14

(54) **A HEIGHT-ADJUSTABLE MULTI-LEGGED STAND AND AN ASSEMBLY COMPRISING THE SAME**
HÖHENVERSTELLBARER MEHRBEINIGER STÄNDER UND ANORDNUNG DAMIT
SUPPORT À PLUSIEURS PIEDS RÉGLABLE EN HAUTEUR ET ENSEMBLE LE COMPRENANT

(30) Priority: 28.07.2021 NL 2028871
(43) Date of publication of application: 06.11.2024
(73) Proprietor: FlexTable B.V., 6591 DA Gennep (NL)
(72) Inventor: BUS, Karolus Theodorus Wilhelmina Maria, 5803 AV VENRAY (NL)
(74) Representative: Kramer-Ograjensek, Petra
(86) International application number: PCT/NL2022/050438
(87) International publication number: WO 2023/008995

(56) References cited:
- EP-A1- 3 243 407
- US-A- 2 171 653

## Description

### FIELD OF THE INVENTION

The present invention relates to a height-adjustable multi-legged stand that can be used for supporting an object, such as for example but not limited to a table leaf, a camera, measurement equipment, a display or at least one person, at an adjustable height above a supporting surface on which the stand is positioned. The invention further relates to an assembly comprising said stand.

### BACKGROUND OF THE INVENTION

Height-adjustable stands and assemblies comprising said stands are known in the art. For example, EP 2 873 344 A1 relates to a piece of furniture, in particular a table, with at least one length-adjustable leg. The length-adjustable leg comprises a first telescopic element that is designed as a hollow body, and a second telescopic element that is arranged to be linearly displaceable within the first telescopic element along a first axis. A locking device that is arranged on the second telescopic element has at least a first pin that is movable via an actuating device from a first position in which the at least first pin prevents a movement of the first telescopic element relative to the second telescopic element by a force fit or form fit, to a second position in which the displacement is not prevented. The locking device also has at least a second pin that is movable by the actuating device from a first state in which the at least second pin is pressed against an inside of a wall of the first telescopic element to clamp the second telescopic element against the first telescopic element, and a second state in which the at least second pin is spaced apart from the wall of the first telescopic element.

Adjusting the height of stands, for example by adjusting the length of the legs of the stand as described in EP 2 873 344 A1, can be quite cumbersome. This is particularly the case if stands have multiple legs. Leveling of such known multi-legged stands on an uneven surface usually can be even more cumbersome as the length of each one of the legs has to be adjusted individually requiring an iterative process for establishing a suitable length for each one of the legs. As a result, setting up and adjusting the heights of a plurality of known multi-legged stands can be time-consuming and preferably is avoided as much as possible.

The height-adjustable stand described in EP 3 243 407 A1 pre-empts or at least reduces at least one of the above-mentioned disadvantages related to known multi-legged stands. The height-adjustable stand for supporting an object described in EP 3 243 407 A1 comprises three legs that in an unlocked state of at least a first locking device are movable simultaneously and independently with respect to each other and with respect to at least a first housing of the at least first locking device, wherein the at least first housing is connected in a first tenacious contact with a first elongated tubular element of the stand. In this way, it is possible that each one of the three legs assumes a different position with respect to the at least first housing thereby adjusting the height of the stand. As a result, the stand allows the user to simultaneously adjust the height of the stand and to stably position the stand even on an uneven supporting surface. If each one of the three legs has assumed an appropriate position relative to the at least first housing, the user can transfer the at least first locking device from the unlocked state to a locked resting state in which the positions of the three legs with respect to the at least first housing are simultaneously fixed.

Despite the above-mentioned advantages of the height-adjustable multi-legged stand described in EP 3 243 407 A1, a disadvantage of said stand is that the complex mechanical construction of the at least first locking device results in an increased chance of failure. In addition, the stand is neither intended nor suitable for supporting heavy loads, such as for example but not limited to at least one adult person. As a result of the foregoing, it will be appreciated that the stand in accordance with EP 3 243 407 A1 has at least one of a reduced manufacturability, reliability and load capacity. In addition, at least due to the complex mechanical construction of the at least first locking device, the costs associated with said stand are rather high.

Based on the above, there is a need for a height-adjustable multi-legged stand having an improved manufacturability, reliability, load capacity, and reduced costs that can be used for supporting an object, such as for example but not limited to a table leaf, a camera, measurement equipment, a display or at least one adult person, at an adjustable height above a supporting surface on which the stand is positionable. In addition, there is a need for an assembly comprising such a stand.

### SUMMARY OF THE INVENTION

It is an object of the present invention to provide a height-adjustable multi-legged stand that pre-empts or at least reduces at least one of the abovementioned and/or other disadvantages associated with height-adjustable multi-legged stands known in the art.

It is also an object of the present invention to provide an assembly comprising a height-adjustable multi-legged stand according to the invention.

Aspects of the present invention are set out in the accompanying independent and dependent claims. Features from the dependent claims may be combined with features from the independent claim as appropriate and not merely as explicitly set out in the claims.

At least one of the abovementioned objects is achieved by a height-adjustable multi-legged stand for supporting an object at an adjustable height above a supporting surface on which the stand is positionable, the stand comprising:
- at least three legs, each leg comprising an elongated part having a longitudinal centerline, the longitudinal centerlines of the elongated parts of the at least three legs being arranged parallel with respect to each other;
- an elongated tubular element that is configured and arranged to at least partially envelop the elongated parts of the at least three legs, the elongated tubular element having a longitudinal centerline that is arranged parallel to the longitudinal centerlines of the elongated parts of the at least three legs;
- a locking arrangement that is arranged at least partially inside the elongated tubular element and at least partially between the elongated parts of the at least three legs, the locking arrangement comprising:
   ▪ a first set of at least two locking elements;
   ▪ a first connecting element that is arranged to extend in a radial direction of the elongated tubular element and arranged to interconnect at least two locking elements of the first set of at least two locking elements;
   ▪ a first housing that is arranged at least partially inside the elongated tubular element and associated in a tenacious contact with an inner surface of the elongated tubular element, the first housing being provided with:
      o a first set of at least three leg guideways, a leg guideway of the first set of at least three leg guideways being configured to:
         - enclose at least a part of the elongated part of a respective leg of the at least three legs; and
         - allow a guided displacement of the elongated part of the respective leg and the first housing with respect to each other in response to a displacement of the elongated tubular element by a user in an axial direction of the elongated tubular element if the locking arrangement is in an unlocked state;
   ▪ a first biasing element that is arranged in an axial direction of the elongated tubular element between the first housing and the first connecting element, the first biasing element being configured to maintain the first connecting element and the first housing at a first distance in an axial direction of the elongated tubular element with respect to each other, thereby maintaining the locking arrangement in a locked resting state;
   ▪ a central operating arrangement comprising an elongated operating element that is associated with the first connecting element, the central operating arrangement being configured and arranged to allow:
      o a first displacement of the elongated operating element in a first axial direction of the elongated tubular element in response to a manipulation of the central operating arrangement by a user, thereby transferring the locking arrangement from the locked resting state to the unlocked state; and
      o a second displacement of the elongated operating element in a second axial direction of the elongated tubular element in response to a force exerted by the first biasing element on the first connecting element and in the absence of the manipulation of the central operating arrangement by a user, thereby transferring the locking arrangement from the unlocked state to the locked resting state, the first displacement and the second displacement of the elongated operating element being displacements in opposite directions;
      wherein the first housing further comprises a first set of at least two locking element guideways, a locking element guideway of the first set of at least two locking element guideways being:
      o configured to enclose at least a part of a respective locking element of the first set of at least two locking elements;
      o arranged to allow arranging the respective locking element opposite the elongated parts of two legs of the at least three legs, the two legs being neighboring legs as seen in a circumferential direction of the elongated tubular element; and
      o provided with an inner surface that comprises at least a first portion that is configured and arranged to guide the respective locking element:
         - away from the elongated parts of the two neighboring legs in response to said first displacement of the elongated operating element and arrange the respective locking element at a first distance in a radial direction of the elongated tubular element with respect to the elongated parts of the two neighboring legs thereby breaking locking contacts between the respective locking element and the elongated parts of the two neighboring legs; and
         - towards the elongated parts of the two neighboring legs in a radial direction of the elongated tubular element in response to said second displacement of the elongated operating element to be associated with the elongated parts of the two neighboring legs, thereby establishing locking contacts between the respective locking element and the elongated parts of the two neighboring legs.

The height-adjustable multi-legged stand in accordance with the above-defined exemplary embodiment allows a user to very conveniently adjust the height of the stand as in response to the manipulation of the central operating arrangement by the user, the locking arrangement can be transferred from the locked resting state to the unlocked state. As a result, the locking contacts between each locking element of the first set of at least two locking elements and the elongated parts of two neighboring legs of the at least three legs of the stand can be broken because in response to said first displacement of the elongated operating element, at least the first portion of the inner surface of each locking element guideway that is configured to enclose at least a part of the respective locking element enables the respective locking element to be guided away from the elongated parts of the two neighboring legs opposite of which it is arranged and to be arranged at a first distance in a radial direction of the elongated tubular element. Consequently, the respective legs and the elongated tubular element which is associated with the first housing in a tenacious contact can be displaced with respect to each other to adjust the height of the stand. In addition, the person skilled in the art will appreciate that each leg can be displaced individually with respect to the first housing and to an extent required for each individual leg. Therefore, the height-adjustable multi-legged stand according to the invention can be stably positioned even on an uneven supporting surface. The foregoing results in an improved ease of use as well as in an improved user experience of the stand according to the present invention.

If the desired height of the stand is obtained, the locking arrangement can be transferred from the unlocked state to the locked resting state by stopping the manipulation of the central operating arrangement by the user. In the absence of the manipulation of the central operating arrangement, a force exerted by the first biasing element on the first connecting element can bring about said second displacement of the elongated operating element, thereby reestablishing the locking contacts between each locking element of the first set of at least two locking elements and the elongated parts of the two neighboring legs of the at least three legs of the stand opposite of which each respective locking element is arranged because at least the first portion of the inner surface of each locking element guideway that is configured to enclose at least a part of the respective locking element, enables the respective locking element to be guided towards the elongated parts of the two neighboring legs opposite of which it is arranged in a radial direction of the elongated tubular element. In this way, the desired height of the stand can at least temporarily be fixed.

The locking contacts between the locking elements of the first set of at least two locking elements and the at least three legs of the stand can be of any suitable releasable type, for example but not limited to a friction-based connection, based on a form-fitting connection or based on a hole-pin connection.

The elongated part of a leg can have any suitable cross-section such as for example but not limited to a polygonal cross-section, such as for example a rectangular cross-section, a circular cross-section or an elliptical cross-section. The elongated part of a leg can be solid or tubular. A tubular elongated part is advantageous for reducing the total weight of the stand and for reducing the total costs of the stand.

The person skilled in the art will appreciate that the locking arrangement and for that matter the stand according to the present invention as a whole is of a simple but effective construction, thereby improving at least the manufacturability and reliability of the height-adjustable multi-legged stand and reducing the costs of said stand.

**In** an embodiment of the height-adjustable multi-legged stand according to the invention, a locking element of the first set of at least two locking elements has an outer surface that comprises a first portion that is matched to said at least first portion of the inner surface of the respective locking element guideway of the first set of at least two locking element guideways by which the locking element is at least partially enclosed, said at least first portion of the inner surface of the respective locking element guideway and said first portion of the outer surface of the locking element being arranged with respect to the longitudinal centerline of the elongated tubular element at an angle α that is in a range from 5 degrees to 45 degrees.

The person skilled in the art will appreciate that if the angle α is smaller than 5 degrees the locking contacts between the locking element an the two neighboring legs opposite of which the locking element is arranged are very strong and consequently, breaking the locking contacts will be very difficult. Similarly, if the angle α is larger than 45 degrees the locking contacts between the locking element and the two neighboring legs opposite of which the locking element is arranged are quite weak and consequently, breaking the locking contacts will be very easy. Based on the foregoing, the person skilled in the art will appreciate that if the angle α is chosen in the range from 5 degrees up to and including 45 degrees, the locking contacts are strong enough to achieve reliable locking of the legs and can be broken easily enough to allow smooth operation of the stand.

In an embodiment of the height-adjustable multi-legged stand according to the invention, the locking contacts between a locking element of the first set of at least two locking elements and the elongated parts of the two legs that are neighboring legs in a circumferential direction of the elongated tubular element comprise:
- a first locking contact between a first area of the outer surface of the locking element and a first area of an outer surface of the elongated part of a first leg of the two neighboring legs; and
- a second locking contact between a second area of the outer surface of the locking element and a second area of an outer surface of the elongated part of a second leg of the two neighboring legs;
wherein the first area and the second area of the outer surface of the locking element are outside of said first portion of the outer surface of the locking element.

In this way, a single locking element of the first set of at least two locking elements can provide locking contacts with two neighboring legs of the at least three legs of the stand.

In an embodiment of the height-adjustable multi-legged stand according to the invention, the first connecting element is configured and arranged to allow:
- in response to said first displacement of the elongated operating element, simultaneously breaking:
   ▪ the locking contacts between a first locking element of the first set of at least two locking elements and a first set of two legs that are neighboring legs in a circumferential direction of the elongated tubular element; and
   ▪ the locking contacts between a second locking element of the first set of at least two locking elements and a second set of two legs that are neighboring legs in a circumferential direction of the elongated tubular element;
- in response to said second displacement of the elongated operating element, simultaneously establishing:
   ▪ the locking contacts between the first locking element of the first set of at least two locking elements and the first set of two neighboring legs; and
   ▪ the locking contacts between the second locking element of the first set of at least two locking elements and the second set of two neighboring legs.

Simultaneously breaking the locking contacts between the locking elements of the first set of at least two locking elements and the respective sets of two neighboring legs opposite of which the locking elements are arranged is advantageous as it allows the at least three legs, if the locking arrangement is in the unlocked state, to be simultaneously displaceable with respect to the first housing or the elongated tubular element for that matter. Moreover, the at least three legs can be displaced independently with respect to the first housing or the elongated tubular element and with respect to each other. In this way, it is possible that each leg of the at least three legs assumes a different position with respect to the first housing when adjusting the height of the stand. As a result, the stand allows a user to adjust the height of the stand and to position the stand stably, even on an uneven supporting surface, at the same time. This is very convenient and saves a lot of time especially when multiple stands have to be set up. If each leg of the at least three legs has assumed an appropriate individual position relative to the first housing or the elongated tubular element, the locking arrangement can be transferred from the unlocked state to the locked resting state in response to said second displacement of the elongated operating element, thereby simultaneously fixing the individual positions of each leg of the at least three legs with respect to the first housing or the elongated tubular element.

In an embodiment of the height-adjustable multi-legged stand according to the invention, the locking contacts between a locking element of the first set of at least two locking elements and the elongated parts of two neighboring legs of the at least three legs are friction-based locking contacts.

An advantage of friction-based locking contacts is that the integrity of both the locking elements and the legs does not have to be compromised. Another advantage of friction-based locking contacts is that the locking contacts can be established at any desired position on the elongated parts of the legs in an axial direction of the elongated parts of the legs, whereas if for example locking contacts that are based on a hole-pin connection are used, the locking contacts can only be established at discrete positions on the elongated parts of the legs in an axial direction of the elongated parts of the legs, i.e. at positions where the elongated parts of the legs are provided with a hole that is configured to receive a pin of a locking element.

In an embodiment of the height-adjustable multi-legged stand according to the invention, a locking element of the first set of at least two locking elements comprises a first wedge-shaped part that in response to said second displacement of the elongated operating element and in cooperation with at least the first portion of the inner surface of the respective locking element guideway that is configured to enclose at least a part of the first wedge-shaped part is arranged in locking contact with the elongated parts of two neighboring legs of the at least three legs thereby establishing said locking contacts.

The person skilled in the art will appreciate that the first wedge-shaped part is advantageous for simultaneously establishing friction-based locking contacts between a locking element and the elongated parts of two neighboring legs of the at least three legs.

In an embodiment of the height-adjustable multi-legged stand according to the invention, a locking element of the first set of at least two locking elements comprises a second wedge-shaped part that is configured and arranged to displace, in response to the first displacement of the elongated operating element, the locking element at least partially in a radial direction of the elongated tubular element upon insertion of the second wedge-shaped part in a respective locking element guideway of the first set of at least two locking element guideways that is configured to enclose at least a part of the first wedge-shaped part, thereby enabling arrangement of the locking element at a second distance in a radial direction of the elongated tubular element, said second distance being in the same direction as the first distance in the radial direction of the elongated tubular element and said second distance being larger than said first distance.

An advantage of applying the second wedge-shaped part is that if during assembly of the stand according to the invention, a locking element of the first set of at least two locking elements is arranged at the second distance in the radial direction of the elongated tubular element, it can be assured that there is more than enough space during insertion of legs, which in operation of the stand are arranged opposite said locking element, via respective leg guideways of the first housing thereby avoiding said legs coming into an undesired contact with the first wedge-shaped part of the locking element of the first set of at least two locking elements. In this way, the manufacturability of the stand can be improved.

In an embodiment of the height-adjustable multi-legged stand according to the invention, the locking arrangement comprises:
- a second set of at least two locking elements;
- a second connecting element that is arranged to extend in a radial direction of the elongated tubular element and arranged to interconnect at least two locking elements of the second set of at least two locking elements, the first housing being provided with a passage that is configured and arranged to allow the elongated operating element of the central operating arrangement to extend past the first housing to allow interconnection of the second connecting element and the first connecting element via the elongated operating element;
- a second housing that is arranged at least partially inside the elongated tubular element and associated in a tenacious contact with the inner surface of the elongated tubular element, the second housing being arranged with respect to the first housing at a second distance in an axial direction of the elongated tubular element, the second housing being provided with:
   ▪ a second set of at least three leg guideways, a leg guideway of the second set of at least three leg guideways being configured to:
      o enclose at least a part of the elongated part of a respective leg of the at least three legs; and
      o allow a guided displacement of the elongated part of the respective leg and the second housing with respect to each other in response to a displacement of the elongated tubular element by a user in an axial direction of the elongated tubular element if the locking arrangement is in the unlocked state;
- a second biasing element that is arranged in an axial direction of the elongated tubular element between the second housing and the second connecting element, the second biasing element being configured to maintain the second connecting element and the second housing at a third distance in an axial direction of the elongated tubular element with respect to each other, thereby maintaining the locking arrangement in the locked resting state;
   wherein the second housing further comprises a second set of at least two locking element guideways, a locking element guideway of the second set of at least two locking element guideways being:
   ▪ configured to enclose at least a part of a respective locking element of the second set of at least two locking elements;
   ▪ arranged to allow arranging the respective locking element opposite the elongated parts of two legs of the at least three legs, the two legs being neighboring legs as seen in a circumferential direction of the elongated tubular element; and
   ▪ provided with an inner surface that comprises at least a second portion that is configured and arranged to guide the respective locking element:
      o away from the elongated parts of the two neighboring legs in response to said first displacement of the elongated operating element and arrange the respective locking element at a third distance in a radial direction of the elongated tubular element with respect to the elongated parts of the two neighboring legs thereby breaking locking contacts between the respective locking element and the two neighboring legs; and
      o towards the elongated parts of the two neighboring legs in a radial direction of the elongated tubular element in response to said second displacement of the elongated operating element to be associated with the elongated parts of the two neighboring legs, thereby establishing locking contacts between the respective locking element and the elongated parts of the two neighboring legs.

The above-defined embodiment of the stand according to the invention enables improving the stability of the stand because the at least three legs can be guided by the respective leg guideways of both the first housing and the second housing of the locking arrangement. The person skilled in the art will appreciate that for improving the stability, in principle it is advantageous if the second distance is as large as possible. **In** a practical application of the stand according to the invention, such as for example but not limited to a height-adjustable table, the second distance in the axial direction of the elongated tubular element at which the second housing is arranged from the first housing can be in a range from 40 mm to 80 mm, for example 60 mm.

The person skilled in the art will appreciate that the stand in accordance with the above-defined embodiment has an increased load capacity that on the one hand is a result of the increased number of locking elements that can be brought into locking contact with the at least three legs of the stand due to the addition of the second set of at least two locking elements, and on the other hand due to the interactions between the locking elements of the respective first set of at least two locking elements and the second set of at least two locking elements and the respective at least first portion and at least second portion of the inner surfaces of the locking element guideways of the respective first housing and the second housing. As a result of said interaction, if the load on the stand is increased, the forces with which the locking elements and the legs are pressed against each other increase, thereby warranting an improved load capacity of the stand.

Furthermore, as the second connecting element is interconnected with the first connecting element via the elongated operating element of the central operating arrangement, the locking elements of the second set of at least two locking elements and the locking elements of the first set of at least two locking elements can simultaneously be arranged in locking contacts with the legs of the stand in response to said second displacement of the elongated operating element that is brought about by a first force exerted on the first connecting element by the first biasing element and by a second force exerted on the second connecting element by the second biasing element in the absence of the manipulation of the central operating arrangement by a user. The person skilled in the art will appreciate that the first force and the second force are exerted in the same direction.

Similarly, the locking contacts between the legs of the stand and the locking elements of the second set of at least two locking elements and the locking elements of the first set of at least two locking elements can simultaneously be broken in response to said first displacement of the elongated operating element that is brought about by the manipulation of the central operating arrangement by a user.

In an embodiment of the height-adjustable multi-legged stand according to the invention, a locking element of the second set of at least two locking elements has an outer surface that comprises a second portion that is matched to said at least second portion of the inner surface of the respective locking element guideway of the second set of at least two locking element guideways by which the locking element is at least partially enclosed, said at least second portion of the inner surface of the respective locking element guideway and said second portion of the outer surface of the locking element being arranged with respect to the longitudinal centerline of the elongated tubular element at an angle β that is in a range from 5° to 45°.

The person skilled in the art will appreciate that for similar reasons as described above in relation to the angle α at which the at least first portion of the inner surface of the respective locking element guideway of the first housing and the first portion of the outer surface of a locking element of the first set of at least two locking elements are arranged with respect to the longitudinal centerline of the elongated tubular element, the locking contacts between the locking elements of the second set of at least two locking elements and the legs of the stand are strong enough to achieve reliable locking of the legs and can be broken easily enough to allow smooth operation of the stand if the angle β is chosen in the range from 5 degrees up to and including 45 degrees.

Furthermore, the person skilled in the art will appreciate that depending on the arrangement of a locking element guideway of the first set of at least two locking element guideways and a locking element guideway of the second set of at least two locking element guideways with respect to the same two neighboring legs of the at least three legs, the angle β and the angle α can have values from the above-mentioned range that are the same or that are different for achieving a similar degree of clamping between a locking element of the first set of at least two locking elements and a locking element of the second set of at least two locking elements.

Moreover, as described above, the interactions between the locking elements of the respective first set of at least two locking elements and the second set of at least two locking elements and the respective at least first portion and at least second portion of the inner surfaces of the locking element guideways of the respective first housing and the second housing enable warranting an improved load capacity of the stand as a result of the increased forces with which the locking elements and the legs are pressed against each other if the load on the stand is increased. The locking contacts between the locking elements of the first set of at least two locking elements and the second set of at least two locking elements and the at least three legs can be construed as self-securing connections if the load on the stand is increased. However, upon reducing or removing the load from the stand, the locking contacts can be broken in response to the manipulation of the central operating arrangement by a user resulting in said first displacement of the elongated operating element, thereby transferring the locking arrangement from the locked resting state to the unlocked state.

In an embodiment of the height-adjustable multi-legged stand according to the invention, the locking contacts between a locking element of the second set of at least two locking elements and the elongated parts of two legs that are neighboring legs in a circumferential direction of the elongated tubular element comprise:
- a third locking contact between a third area of the outer surface of the locking element and a third area of the outer surface of the elongated part of a first leg of the two neighboring legs; and
- a fourth locking contact between a fourth area of the outer surface of the locking element and a fourth area of the outer surface of the elongated part of a second leg of the two neighboring legs;
wherein the third area and the fourth area of the outer surface of the locking element are outside of said second portion of the outer surface of the locking element.

Similarly as described above in relation to a locking element of the first set of at least two locking elements, a single locking element of the second set of at least two locking elements can provide locking contacts with two neighboring legs of the at least three legs of the stand.

In an embodiment of the height-adjustable multi-legged stand according to the invention, at least one of the first area and the second area of the outer surface of a locking element of the first set of at least two locking elements and/or at least one of the third area and the fourth area of the outer surface of a locking element of the second set of at least two locking elements and/or at least one of the first area and the third area of the outer surface of the elongated part of the first leg of the two neighboring legs and/or at least one of the second area and the fourth area of the outer surface of the elongated part of the second leg of the two neighboring legs is provided with a friction-enhancing material and/or a friction-enhancing surface profile.

The friction-enhancing material can be any suitable type of material such as for example but not limited to a polymer such as for example but not limited to polyurethane or a thermoplastic elastomer such as for example thermoplastic polyurethane, or to a rubber such as for example but not limited to EPDM 70 shore. An advantage of thermoplastic polyurethane is that it can be provided using injection molding. The friction-enhancing material can be attached for example by bonding to at least one of the first area and the second area of the outer surface of a locking element of the first set of at least two locking elements and/or at least one of the third area and the fourth area of the outer surface of a locking element of the second set of at least two locking elements and/or at least one of the first area and the third area of the outer surface of the first leg of the two neighboring legs and/or at least one of the second area and the fourth area of the outer surface of the second leg of the two neighboring legs. The bonding can for example be performed by using an adhesive such as any suitable type of glue or any suitable kind of sticky tape.

It is also possible to integrate the friction-enhancing material with at least one of the first area and the second area of the outer surface of a locking element of the first set of at least two locking elements and/or at least one of the third area and the fourth area of the outer surface of a locking element of the second set of at least two locking elements and/or at least one of the first area and the third area of the outer surface of the first leg of the two neighboring legs and/or at least one of the second area and the fourth area of the outer surface of the second leg of the two neighboring legs.

Alternatively or additionally, at least one of the first area and the second area of the outer surface of a locking element of the first set of at least two locking elements and/or at least one of the third area and the fourth area of the outer surface of a locking element of the second set of at least two locking elements and/or at least one of the first area and the third area of the outer surface of the first leg of the two neighboring legs and/or at least one of the second area and the fourth area of the outer surface of the second leg of the two neighboring legs can be provided with a friction-enhancing surface profile. The person skilled in the art will appreciate that any suitable serrated and/or form-fitting but releasable surface profile can be applied.

In an embodiment of the height-adjustable multi-legged stand according to the invention, a locking element of the first set of at least two locking elements and a locking element of the second set of at least two locking elements are arranged for establishing locking contacts with a same pair of neighboring legs of the at least three legs if the locking arrangement is in the locked resting state, and wherein the first area and the third area of an outer surface of the elongated part of a first leg of the same pair of neighboring legs are arranged at different locations along a circumference of the first leg, and the second area and the fourth area of an outer surface of the elongated part of the second leg of the same pair of neighboring legs are arranged at different locations along a circumference of the second leg.

In this way, the stand according to the above-defined embodiment has an increased stability and an increased load capacity because the first leg and the second leg of a same pair of neighboring legs have locking contacts with both a locking element of the first set of at least two locking elements and a locking element of the second set of at least two locking elements, wherein the locking contacts are arranged at mutually different areas along the circumferences of the first leg and the second leg.

In an embodiment of the height-adjustable multi-legged stand according to the invention, the first connecting element and the second connecting element are configured and arranged to allow:
- in response to said first displacement of the elongated operating element, simultaneously breaking:
   ▪ the locking contacts between a locking element of the first set of at least two locking elements and the elongated parts of two neighboring legs of the at least three legs; and
   ▪ the locking contacts between a locking element of the second set of at least two locking elements and the elongated parts of two neighboring legs of the at least three legs; and
- in response to said second displacement of the elongated operating element, simultaneously establishing:
   ▪ the locking contacts between a locking element of the first set of at least two locking elements and the elongated parts of two neighboring legs of the at least three legs; and
   ▪ the locking contacts between a locking element of the second set of at least two locking elements and the elongated parts of two neighboring legs of the at least three legs.

Simultaneously breaking the locking contacts between the locking elements of the first set of at least two locking elements and the locking elements of the second set of at least two locking elements and the two neighboring legs opposite of which the respective locking elements are arranged is advantageous as it allows the at least three legs, if the locking arrangement is in the unlocked state, to be simultaneously displaceable with respect to the first housing and the second housing or the elongated tubular element for that matter that is in tenacious contacts with both the first housing and the second housing. Moreover, the at least three legs can be displaced independently with respect to the first housing and the second housing or the elongated tubular element and with respect to each other. In this way, it is possible that each leg of the at least three legs assumes a different position with respect to the first housing and the second housing when adjusting the height of the stand. As a result, the stand allows a user to adjust the height of the stand and to position the stand stably, even on an uneven supporting surface, at the same time. This is very convenient and saves a lot of time especially when multiple stands have to be set up. If each leg of the at least three legs has assumed an appropriate individual position relative to the first housing and the second housing or the elongated tubular element, the locking arrangement can be transferred from the unlocked state to the locked resting state in response to said second displacement of the elongated operating element, thereby simultaneously fixing the individual positions of each leg of the at least three legs with respect to the first housing and the second housing or the elongated tubular element.

In an embodiment of the height-adjustable multi-legged stand according to the invention, the locking contacts between a locking element of the first set of at least two locking elements and the elongated parts of two neighboring legs of the at least three legs, and the locking contacts between a locking element of the second set of at least two locking elements and the elongated parts of two neighboring legs of the at least three legs are friction-based locking contacts.

As described above, advantages of friction-based locking contacts are that the integrity of both the locking elements and the legs does not have to be compromised, and that they can be established at any desired position on the elongated parts of the legs in an axial direction of the elongated parts of the legs.

In an embodiment of the height-adjustable multi-legged stand according to the invention, a locking element of the second set of at least two locking elements comprises a third wedge-shaped part that in response to said second displacement of the elongated operating element and in cooperation with at least the second portion of the inner surface of the respective locking element guideway that is configured to enclose at least a part of the third wedge-shaped part is arranged in locking contact with the elongated parts of two neighboring legs of the at least three legs thereby establishing said locking contacts.

The person skilled in the art will appreciate that the third wedge-shaped part is advantageous for simultaneously establishing friction-based locking contacts between a locking element and two neighboring legs of the at least three legs.

In an embodiment of the height-adjustable multi-legged stand according to the invention, a locking element of the second set of at least two locking elements comprises a fourth wedge-shaped part that is configured and arranged to displace, in response to the first displacement of the elongated operating element, the locking element at least partially in a radial direction of the elongated tubular element upon insertion of the fourth wedge-shaped part in a respective locking element guideway of the second set of at least two locking element guideways that is configured to enclose at least a part of the third wedge-shaped part, thereby enabling arrangement of the locking element at a fourth distance in a radial direction of the elongated tubular element, said fourth distance being in the same direction as the third distance in the radial direction of the elongated tubular element and said fourth distance being larger than said third distance.

An advantage of applying the fourth wedge-shaped part is that if during assembly of the stand according to the invention, a locking element of the second set of at least two locking elements is arranged at the fourth distance in the radial direction of the elongated tubular element, it can be assured that there is more than enough space during insertion of legs, which in operation of the stand are arranged opposite said locking element, via respective leg guideways of the second housing thereby avoiding said legs coming into an undesired contact with the third wedge-shaped part of the locking element of the second set of at least two locking elements. The person skilled in the art will appreciate that at the same time, a locking element of the first set of at least two locking elements that in operation of the stand is arranged opposite the same legs is arranged at the second distance in the radial direction of the elongated tubular element to ensure that there is more than enough space during insertion of said legs, which in operation of the stand are also arranged opposite the locking element of the first set of at least two locking elements, via respective leg guideways of the first housing thereby also avoiding said legs coming into an undesired contact with the first wedge-shaped part of the locking element of the first set of at least two locking elements. In this way, the stand according to the invention can have an improved manufacturability.

In an embodiment of the height-adjustable multi-legged stand according to the invention, the locking arrangement comprises a fitting element and a third biasing element that is configured and arranged in an axial direction of the elongated tubular element relative to the first housing to keep the fitting element at least partially inserted in a respective leg guideway of the first set of at least three leg guideways and thereby in abutting contacts with the first housing and the elongated part of a leg of the at least three legs that is at least partially enclosed by the respective leg guideway, the fitting element being configured and arranged to be displaceable out of the respective leg guideway in at least an axial direction of the elongated tubular element under influence of the first connecting element in response to said first displacement of the elongated operating element.

In this way, it is possible to accommodate tolerances due to deviations in outer dimensions of a respective leg guideway of the second housing and/or a leg of the second set of at least three legs that in operation of the stand is arranged to be at least partially enclosed by said respective leg guideway. As a result, the stand according to the invention is less sensitive to fabrication tolerances of individual parts and hence has an improved manufacturability.

In an embodiment of the height-adjustable multi-legged stand according to the invention, the central operating arrangement comprises a control element that is interconnected with the elongated operating element via a transmission unit, the transmission unit being configured and arranged to allow transferring:
- a first displacement of the control element from a first resting position to a second activated position in response to a manipulation of the control element by a user, into said first displacement of the elongated operating element thereby transferring the locking arrangement from the locked resting state to the unlocked state; and
- said second displacement of the elongated operating element, in the absence of the manipulation of the control element by a user, into a second displacement of the control element from the second activated position to the first resting position thereby transferring the locking arrangement from the unlocked state to the locked resting state.

The person skilled in the art will appreciate that the transmission unit can be implemented in any suitable way for transferring a displacement of the control element into said first displacement or said second displacement of the elongated operating element for transferring the locking arrangement from the locked resting state to the unlocked state, and vice versa.

Depending on for example the limitations posed by the product in which the stand is to be applied, for example but not limited to a height-adjustable table, the control element can be arranged with respect to the elongated tubular element in such a way that a user can easily manipulate the control element for transferring the locking arrangement from the locked resting state to the unlocked state, and vice versa. In this way, a satisfactorily ease of use and user experience of the stand and/or of the product in which the stand is applied can be achieved.

According to another aspect of the present invention, an assembly is provided comprising a height-adjustable multi-legged stand according to the present invention. The assembly can be a table wherein a table leaf and said stand are at least releasably connected with each other. The assembly can also comprise a camera or a piece of measurement equipment or a display such as for example an LED display that can be releasably connected with the height-adjustable stand according to the present invention.

As a result of the above-described advantages of the height-adjustable multi-legged stand according to the invention, the person skilled in the art will appreciate that an assembly comprising such a stand also has an improved manufacturability, reliability, load capacity, and reduced costs. The improved manufacturability of the stand and of the assembly for that matter is a result of the fact that the height-adjustable multi-legged stand according to the present invention comprises less components than the stand known from for example EP 3 243 407 A1. In addition, the improved configuration and arrangement of the components of the stand according to the present invention has resulted in the improved reliability and load capacity of the stand and of the assembly for that matter.

Based on the above, it is clear that in the event that the assembly according to the present invention is a table, the table can be stably positioned even on an uneven supporting surface as the legs of the stand can be individually positioned with respect to the elongated tubular element if the locking arrangement is in the unlocked state. By transferring the locking arrangement to the locked resting state, the position of each of the legs with respect to the elongated tubular element can be fixed, thereby fixing a desired height of the stand and as a result thereof fixing a desired height of the table leaf above the supporting surface on which the stand is positioned. In addition, a table comprising the stand according to the invention can support heavy loads, such as for example but not limited to at least one adult person.

### BRIEF DESCRIPTION OF THE DRAWINGS

Further features and advantages of the invention will become apparent from the description of the invention by way of exemplary and non-limiting embodiments of a height-adjustable multi-legged stand and an assembly comprising such a stand according to the invention.

The person skilled in the art will appreciate that the described embodiments of the height-adjustable multi-legged stand and the assembly according to the invention are exemplary in nature only and not to be construed as limiting the scope of protection in any way. The person skilled in the art will realize that alternatives and equivalent embodiments of the height-adjustable multi-legged stand and the assembly according to the invention can be conceived and reduced to practice without departing from the scope of protection of the present invention.

Reference will be made to the figures on the accompanying drawing sheets. The figures are schematic in nature and therefore not necessarily drawn to scale. Furthermore, equal reference numerals denote equal or similar parts.

On the attached drawing sheets,
figure 1 shows a schematic isometric view of a first exemplary, non-limiting embodiment of a height-adjustable multi-legged stand according to the present invention, wherein the elongated tubular element is partly cut-away showing a housing of the locking arrangement and the arrangement of the elongated parts of three of the four legs with respect to the elongated tubular element of the stand;
figure 2 shows a schematic isometric view of a first exemplary, non-limiting embodiment of a part of a locking arrangement of the height-adjustable multi-legged stand shown in figure 1, wherein for the sake of clarity, the elongated parts of only two of the four legs of the stand are shown;
figure 3A shows a schematic side view of the first exemplary, non-limiting embodiment of the locking arrangement as shown in figure 2, wherein the locking arrangement is in an unlocked state;
figure 3B shows a schematic side view of the first exemplary, non-limiting embodiment of the locking arrangement as shown in figure 2, wherein the locking arrangement is in a locked resting state;
figure 4A shows a schematic bottom view of the first exemplary, non-limiting embodiment of the locking arrangement as shown in figures 2 and 3A, wherein the locking arrangement is in the unlocked state;
figure 4B shows a schematic bottom view of the first exemplary, non-limiting embodiment of the locking arrangement as shown in figures 2 and 3B, wherein the locking arrangement is in the locked resting state;
figure 5 shows a schematic isometric view of the first exemplary, non-limiting embodiment of a first housing of the locking arrangement without the two legs of the four legs of the stand, thereby offering a detailed view on the arrangement and configuration of the leg guideways and the locking element guideways the first housing is provided with;
figure 6 shows a schematic side view of the first exemplary, non-limiting embodiment of the locking arrangement shown in figure 5, wherein a first portion of an inner surface of a locking element guideway of the first housing and a first portion of an outer surface of a locking element of a first set of locking elements is arranged with respect to the longitudinal centerline of the elongated tubular element at an angle α;
figure 7 shows a schematic isometric view of a second exemplary, non-limiting embodiment of the locking arrangement of the height-adjustable multi-legged stand according to the present invention, wherein the locking arrangement comprises a second housing that is arranged with respect to the first housing at a distance in an axial direction of the elongated tubular element, the elongated tubular element not being shown for the sake of clarity;
figure 8 shows a schematic side view of the second exemplary, non-limiting embodiment of the locking arrangement shown in figure 7, wherein a second portion of an inner surface of a locking element guideway of the second housing and a second portion of an outer surface of a locking element of a second set of locking elements is arranged with respect to the longitudinal centerline of the elongated tubular element at an angle β;
figure 9 shows a schematic isometric view of a first exemplary, non-limiting embodiment of an assembly that comprises the height-adjustable multi-legged stand according to the present invention;
figure 10 shows a schematic isometric view of a second exemplary, non-limiting embodiment of an assembly that comprises the height-adjustable multi-legged stand according to the present invention; and
figure 11 shows a schematic isometric view of a third exemplary, non-limiting embodiment of the locking arrangement of a height-adjustable multi-legged stand according to the present invention that comprises three legs.

### DETAILED DESCRIPTION OF EMBODIMENTS

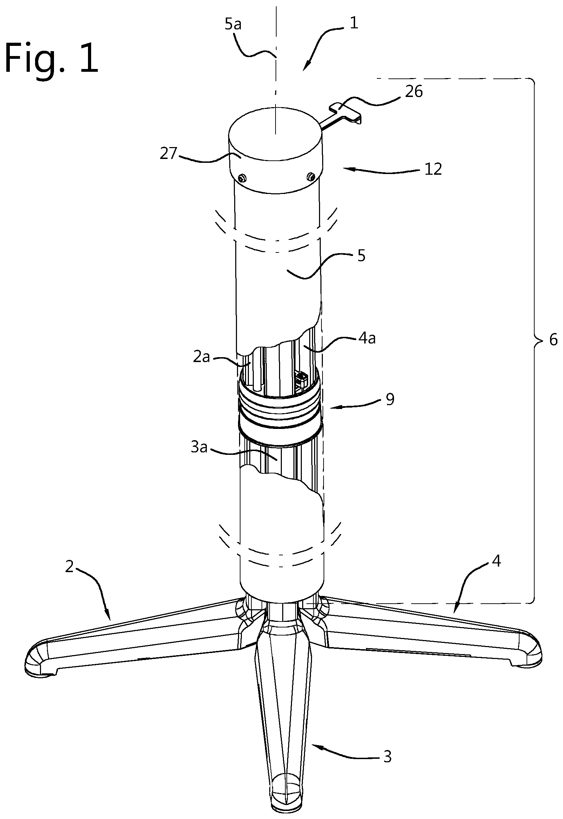

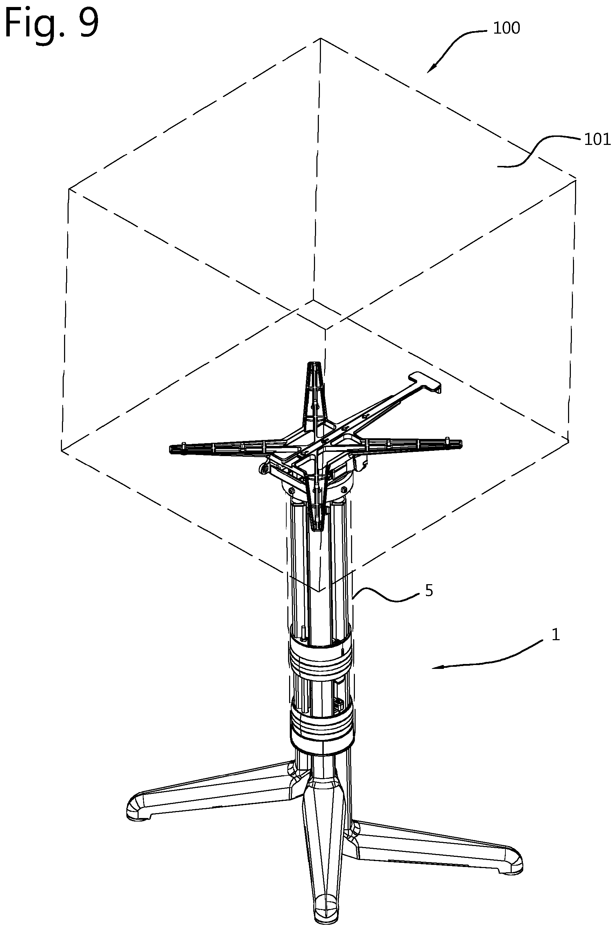

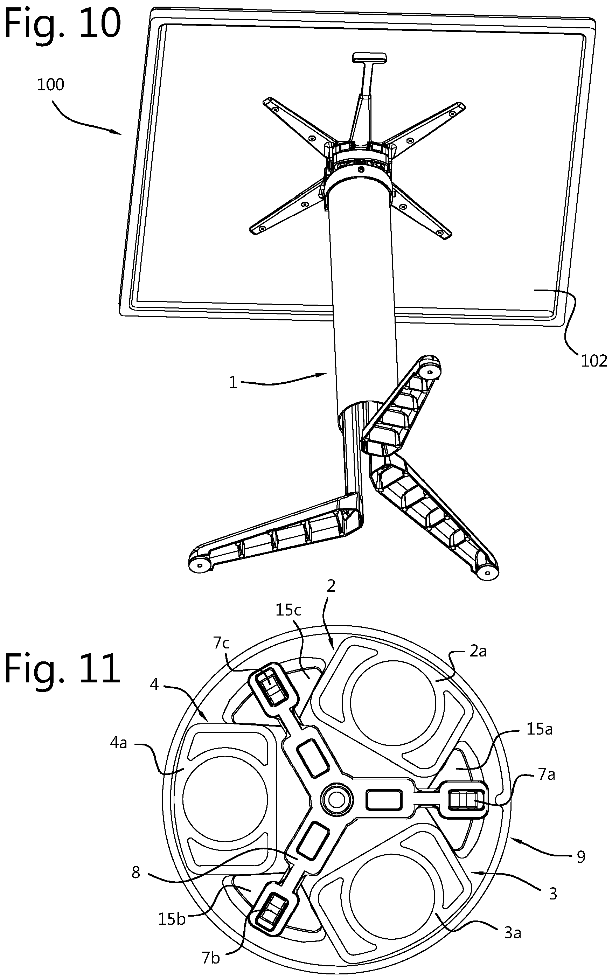

Figure 1 shows a schematic isometric view of a first exemplary, non-limiting embodiment of a height-adjustable multi-legged stand 1 according to the present invention for supporting an object at an adjustable height above a supporting surface on which the stand 1 is positionable. The stand 1 shown in figure 1 comprises four legs of which only three legs 2, 3, 4 are visible. In accordance with the exemplary, non-limiting embodiments of an assembly comprising the stand 1 shown in figures 9 and 10, the stand 1 can also comprise three legs 2, 3, 4. The legs 2, 3, 4 of the stand 1 comprise elongated parts 2a, 3a, 4a having longitudinal centerlines that are arranged parallel with respect to each other.

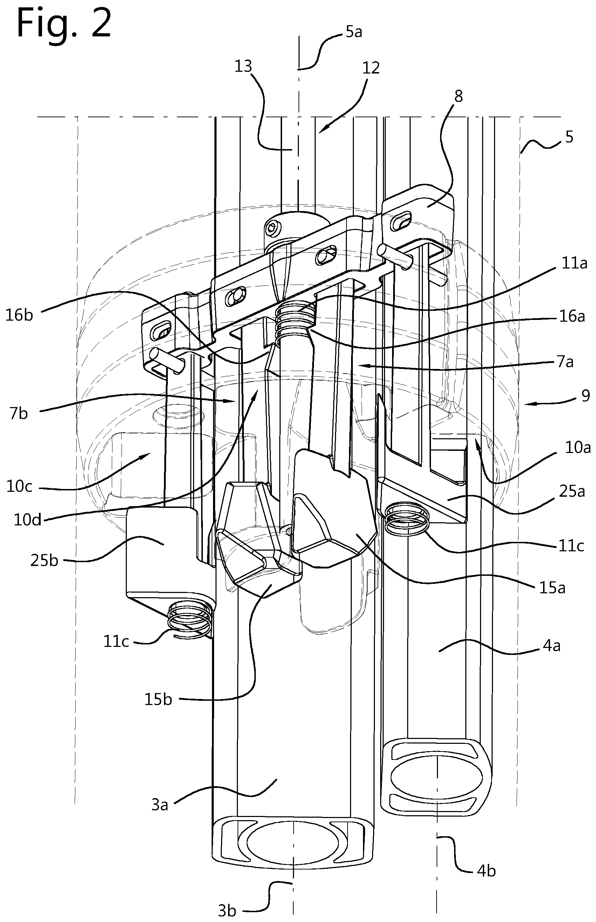

The stand 1 shown in for example figures 1, 9 and 10 also comprises an elongated tubular element 5 that is configured and arranged to at least partially envelop the elongated parts 2a, 3a, 4a of the visible legs 2, 3, 4. As shown in for example figure 2, the elongated tubular element 5 has a longitudinal centerline 5a that is arranged parallel to the longitudinal centerlines 3b, 4b of the elongated parts 3a, 4a of the legs 3, 4. The elongated tubular element 5 can comprise metal, preferably aluminum for reducing the weight of the stand 1. The stand 1 further comprises a locking arrangement 6 that is arranged at least partially inside the elongated tubular element 5 and at least partially between the elongated parts 2a, 3a, 4a of the legs 2, 3, 4.

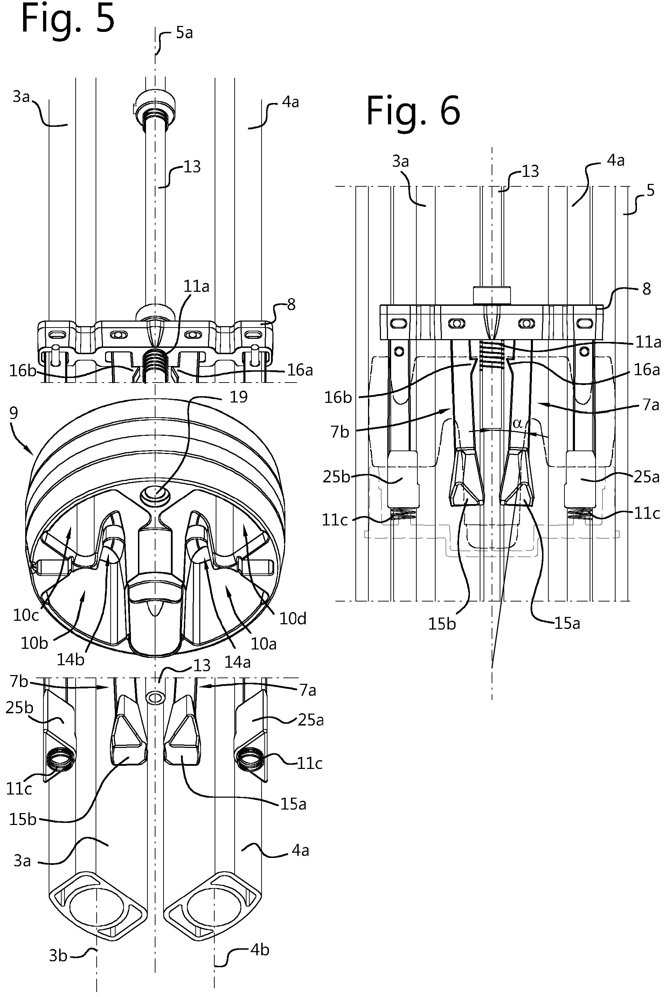

Figure 2 shows a schematic isometric view of a first exemplary, non-limiting embodiment of a part of the locking arrangement, wherein for the sake of clarity, the elongated parts 3a, 4a of two legs 3, 4 of the four legs are shown. The locking arrangement comprises a first set of two locking elements 7a, 7b and a first connecting element 8 that is arranged to extend in a radial direction of the elongated tubular element 5 and arranged to interconnect the two locking elements 7a, 7b. The locking arrangement further comprises a first housing 9, which in accordance with the exemplary embodiment shown in figure 2, is arranged inside the elongated tubular element 5. As shown in for example figure 1 and 6, the first housing 9 is associated in a tenacious contact with an inner surface of the elongated tubular element 5.

In the first exemplary, non-limiting embodiment of the first housing 9 of the locking arrangement shown in figure 5, the first housing 9 is provided with a first set of four leg guideways 10a, 10b, 10c, 10d, wherein a leg guideway is configured to enclose a part of an elongated part of a respective leg of the four legs. As mentioned above, for the sake of clarity only the elongated parts 3a, 4a of two legs 3, 4 of the four legs are shown in figure 5. Each leg guideway 10a, 10b, 10c, 10d allows a guided displacement of the elongated part of the respective leg and the first housing 9 with respect to each other in response to a displacement of the elongated tubular element by a user in an axial direction of the elongated tubular element if the locking arrangement is in an unlocked state.

The locking arrangement also comprises a first biasing element 11a that is arranged in an axial direction of the elongated tubular element between the first housing 9 and the first connecting element 8. In the exemplary embodiments shown in figures 2, 3A, 3B, 5, 6, 7 and 8, the first biasing element 11a is a compression spring. The first biasing element 11a is configured to maintain the first connecting element 8 and the first housing 9 at a first distance in an axial direction of the elongated tubular element with respect to each other, thereby maintaining the locking arrangement in a locked resting state.

In addition, the locking arrangement comprises a central operating arrangement 12 that comprises an elongated operating element 13 that is associated with the first connecting element 8, wherein the central operating arrangement 12 is configured and arranged to allow a first displacement of the elongated operating element 13 in a first axial direction of the elongated tubular element in response to a manipulation of the central operating arrangement 12 by a user, thereby transferring the locking arrangement from the locked resting state to the unlocked state, and a second displacement of the elongated operating element 13 in a second axial direction of the elongated tubular element in response to a force exerted by the first biasing element 11a on the first connecting element 8 and in the absence of the manipulation of the central operating arrangement 12 by a user, thereby transferring the locking arrangement 6 from the unlocked state to the locked resting state. The first displacement and the second displacement of the elongated operating element 13 are displacements in opposite directions.

Figures 1, 9 and 10 show that the central operating arrangement 12 comprises a control element 26. The control element 26 is interconnected with the elongated operating element 13 via a transmission unit 27 that is configured and arranged to allow transferring a first displacement of the control element 26 from a first resting position to a second activated position in response to a manipulation of the control element 26 by a user, into said first displacement of the elongated operating element 13 thereby transferring the locking arrangement 6 from the locked resting state to the unlocked state, and said second displacement of the elongated operating element 13, in the absence of the manipulation of the control element 26 by a user, into a second displacement of the control element 26 from the second activated position to the first resting position thereby transferring the locking arrangement 6 from the unlocked state to the locked resting state.

As mentioned above, the transmission unit 27 can be implemented in any suitable way for transferring a displacement of the control element 26 into said first displacement or said second displacement of the elongated operating element 13 for transferring the locking arrangement from the locked resting state to the unlocked state, and vice versa.

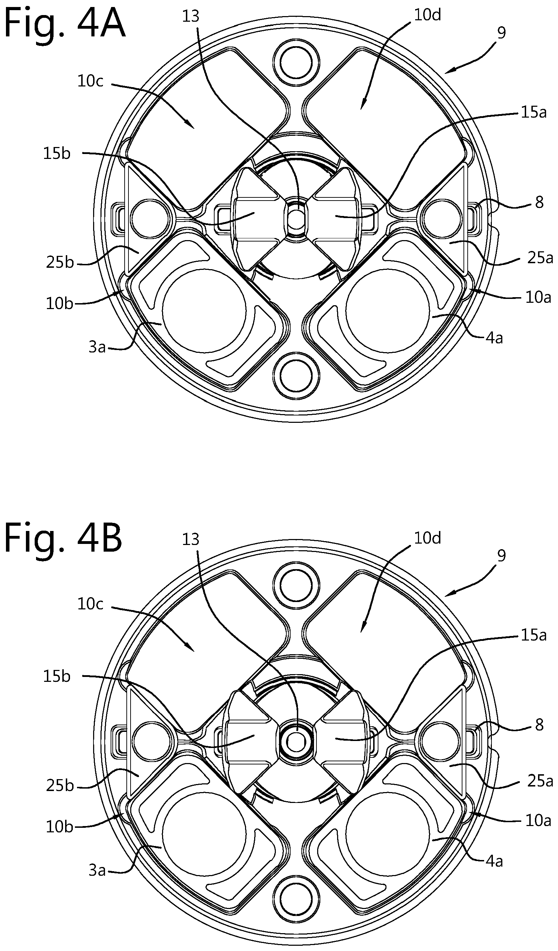

In accordance with the first exemplary, non-limiting embodiment of the first housing 9 shown in figures 2 and 5, the first housing 9 further comprises a first set of two locking element guideways 14a, 14b. A locking element guideway being configured to enclose a part of a respective locking element of the first set of two locking elements 7a, 7b and arranged to allow arranging the respective locking element opposite the elongated parts of two legs of the four legs of the stand 1, wherein the two legs are neighboring legs as seen in a circumferential direction of the elongated tubular element 5. This is shown in the schematic bottom view of figure 4B.

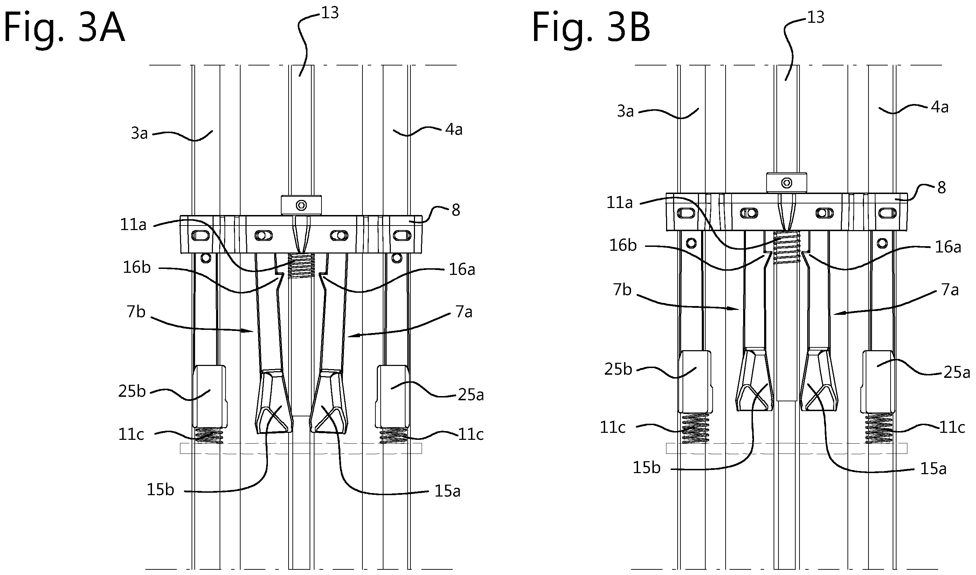

Figures 5 and 6 show that each locking element guideway is provided with an inner surface that comprises a first portion that is configured and arranged to guide the respective locking element. Figures 3A, 3B, 4A, 4B, 5 and 6 show that the respective locking element is guided away from the elongated parts of the two neighboring legs in response to said first displacement of the elongated operating element 13 and thereby arranged at a first distance in a radial direction of the elongated tubular element 5 with respect to the elongated parts of the two neighboring legs. In this way, locking contacts between the respective locking element and the elongated parts of the two neighboring legs are broken. In response to said second displacement of the elongated operating element 13, the respective locking element is guided towards the elongated parts of the two neighboring legs in a radial direction of the elongated tubular element 5 to be associated with the elongated parts of the two neighboring legs. In this way, locking contacts are established between the respective locking element and the elongated parts of the two neighboring legs.

Figure 2 shows that the locking arrangement comprises a fitting element 25a and a third biasing element 11c that is configured and arranged in an axial direction of the elongated tubular element 5 relative to the first housing 9. In the exemplary embodiments shown in figures 2, 3A, 3B, 5, 6, 7 and 8, the third biasing element 11c is a compression spring. The third biasing element 11c is configured and arranged to keep the fitting element 25a at least partially inserted in a respective leg guideways 10a, 10d and thereby in abutting contacts with the first housing 9, the elongated part 4a of the leg 4, and the elongated part of the leg that in use of the stand would be enclosed by leg guideway 10d. The fitting element 25a is configured and arranged to be displaceable out of the respective leg guideways 10a, 10d in at least an axial direction of the elongated tubular element 5 under influence of the first connecting element 8 in response to said first displacement of the elongated operating element 13. The latter is illustrated in figure 3A. An analogous description holds for fitting element 25b in relation to leg guideways 10b, 10c. The latter is illustrated in figure 4B. As described above, the fitting elements 25a, 25b enable accommodating tolerances due to deviations in outer dimensions of a respective leg guideways and/or the respective elongated leg parts. As a result, the stand 1 is less sensitive to fabrication tolerances of individual parts and hence has an improved manufacturability.

Figure 6 shows a schematic side view of the first exemplary, non-limiting embodiment of the locking arrangement shown in figure 5, wherein a first portion of an inner surface of a locking element guideway of the first housing 9 and a first portion of an outer surface of a locking element 7a of the first set of locking elements is arranged with respect to the longitudinal centerline 5a of the elongated tubular element 5 at an angle α. The outer surface of the first portion of the locking element is matched to the first portion of the inner surface of the respective locking element guideway. For the reasons described above, the angle α is in a range from 5 degrees to 45 degrees to ensure that the locking contacts are strong enough to achieve reliable locking of the legs and can be broken easily enough to allow smooth operation of the stand 1.

In view of the above and taking the teaching of for example figures 2, 4A, 4B and 5 into account, the person skilled in the art will appreciate that the locking elements 7a, 7b comprise first wedge-shaped parts 15a, 15b that in response to said second displacement of the elongated operating element 13 and in cooperation with at least the first portion of the inner surface of the respective locking element guideways 14a, 14b that are configured to enclose at least a part of the first wedge-shaped parts 15a, 15b respectively, are arranged in locking contact with the elongated parts of two neighboring legs thereby simultaneously establishing friction-based locking contacts between locking element 7a and the elongated parts of two neighboring legs and between locking element 7b and the elongated parts of another pair of neighboring legs.

Figure 3A shows a schematic side view of the first exemplary, non-limiting embodiment of the locking arrangement as shown in figure 2, wherein the locking arrangement is in an unlocked state. The locking elements 7a, 7b comprise second wedge-shaped parts 16a, 16b that are configured and arranged to displace, in response to the first displacement of the elongated operating element 13, the locking elements 7a, 7b at least partially in a radial direction of the elongated tubular element 5 upon insertion of the second wedge-shaped parts 16a, 16b in respective locking element guideways 14a, 14b that are configured to enclose at least a part of the first wedge-shaped parts 15a, 15b respectively, thereby enabling arrangement of the locking elements 7a, 7b at a second distance in a radial direction of the elongated tubular element 5. Figure 3B shows the locking arrangement in a locked resting state. By comparing figures 3A and 3B it is clear that the second distance is in the same direction as the above-mentioned first distance in the radial direction of the elongated tubular element 5 and that the second distance is larger than the first distance.

As mentioned above, an advantage of the second wedge-shaped parts 16a, 16b is that if during assembly of the stand 1, a locking element is arranged at the second distance in the radial direction of the elongated tubular element, it can be assured that there is more than enough space during insertion of legs, which in operation of the stand are arranged opposite said locking element, via respective leg guideways of the first housing thereby avoiding said legs coming into an undesired contact with the first wedge-shaped part of the locking element. In this way, the manufacturability of the stand 1 can be improved.

Figure 4A shows a schematic bottom view of the first exemplary, non-limiting embodiment of the locking arrangement as shown in figures 2 and 3A, wherein the locking arrangement is in the unlocked state, i.e. the locking elements and in particular the first wedge-shaped parts 15a, 15b of the locking elements 7a, 7b are at the above-mentioned first distance from the elongated parts of the respective pairs of legs opposite of which they are arranged. As mentioned above, the locking contacts can be simultaneously broken in response to the first displacement of the elongated operating element 13 in the first axial direction of the elongated tubular element 5.

Figure 4B shows a schematic bottom view of the first exemplary, non-limiting embodiment of the locking arrangement as shown in figures 2 and 3B, wherein the locking arrangement is in the locked resting state, i.e. the locking elements and in particular the first wedge-shaped parts 15a, 15b of the locking elements 7a, 7b are arranged in a locking contacts with the elongated parts of the respective pairs of legs opposite of which they are arranged.

Figure 4B shows a first locking contact between a first area of the outer surface of the first wedge-shaped part 15a of the locking element and a first area of an outer surface of the elongated part 4a of a first leg of two neighboring legs. The person skilled in the art will appreciate that in use of the stand 1 a second locking contact will be established between a second area of the outer surface of the first wedge-shaped part 15a of the locking element and a second area of an outer surface of the elongated part of a second leg of the two neighboring legs that would be enclosed by the leg guideway 10d. In view of all of the above in combination with the teachings from figures 5 and 6, the person skilled in the art will appreciate that the above-mentioned first area and second area of the outer surface of the first wedge-shaped part 15a of the locking element are outside of the first portion of the outer surface of the locking element that is matched to the first portion of the inner surface of the locking element guideway 14a that is arranged to at least partially enclose the first wedge-shaped part 15a of the locking element 7a. In this way, a single locking element can provide locking contacts with two neighboring legs of the stand 1. As mentioned above, the locking contacts can be simultaneously established in response to the second displacement of the elongated operating element 13 in the second axial direction of the elongated tubular element 5. It will be clear that the above applies in a similar way to the first wedge-shaped part 15b of the locking element 7b.

The locking contacts shown in figure 4B are an example of friction-based locking contacts. In order to improve the friction-based locking contacts the elongated parts of neighboring legs and/or the above-mentioned first area and second area of the outer surface of the first wedge-shaped part 15a of the locking element 7a can be provided with a friction-enhancing material and/or a friction-enhancing surface profile. As described above, the friction-enhancing material can be any suitable type of material such as for example but not limited to a polymer such as for example but not limited to polyurethane or a thermoplastic elastomer such as for example thermoplastic polyurethane, or to a rubber such as for example but not limited to EPDM 70 shore. Thermoplastic polyurethane can be integrated with the first wedge-shaped part 15a of the locking element 7a using a two-component injection molding process. Regarding the friction-enhancing surface profile it is noted that any suitable serrated and/or form-fitting but releasable surface profile can be used.

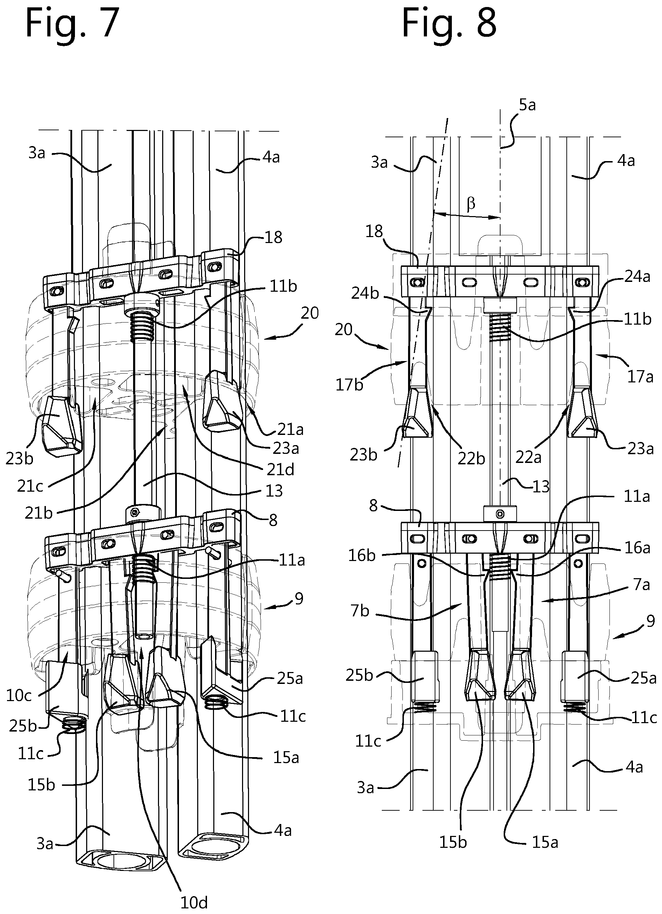

Figure 7 shows a schematic isometric view of a second exemplary, non-limiting embodiment of the locking arrangement of the height-adjustable multi-legged stand according to the present invention, wherein the locking arrangement comprises a second set of two locking elements 17a, 17b, and a second connecting element 18 that is arranged to interconnect the two locking elements 17a, 17b and to extend in a radial direction of the elongated tubular element 5, which for the sake of clarity is not shown in figure 7. The first housing 9 is provided with a passage 19, as clearly shown in figure 5, the passage 19 being configured and arranged to allow the elongated operating element 13 of the central operating arrangement to extend past the first housing 9 to allow interconnection of the first connecting element 8 and the second connecting element 18 via the elongated operating element 13.

Figure 7 shows that the locking arrangement further comprises a second housing 20 that in use of the stand preferably is arranged inside the elongated tubular element and is associated in a tenacious contact with the inner surface of the elongated tubular element. The second housing 20 is arranged with respect to the first housing 9 at a second distance in an axial direction of the elongated tubular element. It is noted that the first housing 9 and the second housing 20 can comprise polymer material. In this way, the total weight of the stand 1 can be reduced.

The second housing 20 is provided with a second set of four leg guideways 21a, 21b, 21c, 21d, wherein a leg guideway of the second set of leg guideways is configured to enclose a part of the elongated part of a respective leg of the four legs. As mentioned above, for the sake of clarity only the elongated parts 3a, 4a of two legs 3, 4 of the four legs are shown in figure 7. Each leg guideway 21a, 21b, 21c, 21d allows a guided displacement of the elongated part of the respective leg and the first housing 20 with respect to each other in response to a displacement of the elongated tubular element 5 by a user in an axial direction of the elongated tubular element 5 if the locking arrangement is in the unlocked state.

The locking arrangement further comprises a second biasing element 11b that is arranged in an axial direction of the elongated tubular element 5 between the second housing 20 and the second connecting element 18. In the exemplary embodiments shown in figures 7 and 8, the second biasing element 11b is a compression spring. The second biasing element 11b is configured to maintain the second connecting element 18 and the second housing 20 at a third distance in an axial direction of the elongated tubular element with respect to each other, thereby maintaining the locking arrangement in the locked resting state.

In accordance with the second exemplary, non-limiting embodiment of the second housing 20 shown in figures 7 and 8, the second housing 20 further comprises a second set of two locking element guideways 22a, 22b. A locking element guideway of the second set of two locking element guideways being configured to enclose a part of a respective locking element of the second set of two locking elements 17a, 17b, and arranged to allow arranging the respective locking element opposite the elongated parts of two legs of the four legs of the stand 1, wherein the two legs are neighboring legs as seen in a circumferential direction of the elongated tubular element.

Figures 7 and 8 show that each locking element guideway 22a, 22b is provided with an inner surface that comprises a second portion that is configured and arranged to guide the respective locking element. In a similar way as shown in figures 3A, 3B, 4A and 4B, the respective locking element is guided away from the elongated parts of the two neighboring legs in response to said first displacement of the elongated operating element 13 and thereby arranged at a third distance in a radial direction of the elongated tubular element with respect to the elongated parts of the two neighboring legs. In this way, locking contacts between the respective locking element and the elongated parts of the two neighboring legs are broken. In response to said second displacement of the elongated operating element 13, the respective locking element is guided towards the elongated parts of the two neighboring legs in a radial direction of the elongated tubular element 5 to be associated with the elongated parts of the two neighboring legs. In this way, locking contacts are established between the respective locking element and the elongated parts of the two neighboring legs.

The embodiment of the stand shown in figure 7 enables improving the stability of the stand because the four legs can be guided by the respective leg guideways of both the first housing 9 and the second housing 20 of the locking arrangement. The person skilled in the art will appreciate that for improving the stability, in principle it is advantageous if the second distance is as large as possible. In a practical application of the stand according to the invention, such as for example but not limited to a height-adjustable table, the second distance in the axial direction of the elongated tubular element at which the second housing 20 is arranged from the first housing 9 can be in a range from 40 mm to 80 mm, for example 60 mm.

Furthermore, as the second connecting element 18 is interconnected with the first connecting element 8 via the elongated operating element 13 of the central operating arrangement, the two locking elements 17a, 17b of the second set of locking elements and the locking elements 7a, 7b of the first set of locking elements can simultaneously be arranged in locking contacts with the legs of the stand in response to said second displacement of the elongated operating element 13 that is brought about by a first force exerted on the first connecting element 8 by the first biasing element 11a and by a second force exerted on the second connecting element 18 by the second biasing element 11b in the absence of the manipulation of the central operating arrangement by a user. The person skilled in the art will appreciate that the first force and the second force are exerted in the same direction. Similarly, the locking contacts between the legs of the stand and the locking elements 17a, 17b of the second set of locking elements and the locking elements 7a, 7b of the first set of locking elements can simultaneously be broken in response to said first displacement of the elongated operating element 13 that is brought about by the manipulation of the central operating arrangement by a user.

Figure 8 shows a schematic side view of the second exemplary, non-limiting embodiment of the locking arrangement shown in figure 7, wherein a second portion of an inner surface of a locking element guideway of the second housing 20 and a second portion of an outer surface of a locking element 17b of the second set of locking elements is arranged with respect to the longitudinal centerline 5a of the elongated tubular element at an angle β. The outer surface of the second portion of the locking element is matched to the second portion of the inner surface of the respective locking element guideway of the second housing 20. For the reasons described above, the angle β is in a range from 5 degrees to 45 degrees to ensure that the locking contacts are strong enough to achieve reliable locking of the legs and can be broken easily enough to allow smooth operation of the stand 1.

Figures 7 and 8 show that the locking elements 17a, 17b of the second set of locking elements comprise fourth wedge-shaped parts 24a, 24b that are configured and arranged to displace, in response to the first displacement of the elongated operating element 13, the locking elements 17a, 17b at least partially in a radial direction of the elongated tubular element upon insertion of the fourth wedge-shaped parts 24a, 24b in a respective locking element guideways 22a, 22b that are configured to enclose at least a part of the third wedge-shaped parts 23a, 23b of the locking elements 17a, 17b, respectively, thereby enabling arrangement of the locking elements 17a, 17b at a fourth distance in a radial direction of the elongated tubular element. The person skilled in the art will appreciate that, similarly as described above with respect to the first distance and the second distance in the radial direction of the elongated tubular element at which the locking elements 7a, 7b of the first set of locking elements can be arranged, said fourth distance is in the same direction as the third distance in the radial direction of the elongated tubular element, and said fourth distance is larger than said third distance.

As mentioned above, an advantage of the fourth wedge-shaped parts 24a, 24b is that if during assembly of the stand 1, the locking elements 17a, 17b are arranged at the fourth distance in the radial direction of the elongated tubular element, it can be assured that there is more than enough space during insertion of legs, which in operation of the stand are arranged opposite said locking elements, via respective leg guideways of the second housing 20 thereby avoiding said legs coming into an undesired contact with the third wedge-shaped parts 23a, 23b of the locking elements 17a, 17b of the second set of locking elements. The person skilled in the art will appreciate that at the same time, the locking elements 7a, 7b of the first set of locking elements that in operation of the stand are arranged opposite the same legs are arranged at the second distance in the radial direction of the elongated tubular element to ensure that there is more than enough space during insertion of said legs, which in operation of the stand are also arranged opposite the locking elements 7a, 7b of the first set of locking elements, via respective leg guideways of the first housing 9 thereby also avoiding said legs coming into an undesired contact with the first wedge-shaped parts 15a, 15b of the locking elements 7a, 7b of the first set of locking elements. **In** this way, the stand 1 according to the invention can have an improved manufacturability.

Figure 9 shows a schematic isometric view of a first exemplary, non-limiting embodiment of an assembly 100 that comprises the height-adjustable multi-legged stand 1 according to the present invention. The assembly 100 can comprise a camera or a piece of measurement equipment or a display such as for example an LED display that can be releasably connected with the height-adjustable multi-legged stand 1. The dashed box 101 in figure 9 schematically represents the camera, the piece of measurement equipment or the display that can be supported by the stand 1 at adjustable heights above a supporting surface on which the stand 1 is positioned. As a result of the above-described advantages of the height-adjustable multi-legged stand 1 according to the invention, the person skilled in the art will appreciate that the assembly 100 comprising such a stand also has an improved manufacturability, reliability, load capacity, and reduced costs.

Figure 10 shows a schematic isometric view of a second exemplary, non-limiting embodiment of an assembly 100 that comprises the height-adjustable multi-legged stand 1 according to the present invention. The assembly 100 shown in figure 10 is a table comprising a table leaf 102 that can be at least releasably connected to the stand 1. The table leaf 102 can be folded away so that less space is required to store the table when not in use.

Based on all of the above, it is clear that the table shown in figure 10 can be stably positioned even on an uneven supporting surface as the legs of the stand 1 can be individually positioned with respect to the elongated tubular element if the locking arrangement is in the unlocked state. By transferring the locking arrangement to the locked resting state, the position of each of the legs with respect to the elongated tubular element can be fixed, thereby fixing a desired height of the stand and as a result thereof fixing a desired height of the table leaf above the supporting surface on which the stand is positioned. In addition, the table shown in figure 10 can support heavy loads, such as for example but not limited to at least one adult person.

The present invention can be summarized as relating to a height-adjustable multi-legged stand 1 for supporting an object at an adjustable height above a supporting surface on which the stand is positionable. The stand comprises at least three legs 2, 3, 4, an elongated tubular element 5 that at least partially envelops said legs and a locking arrangement 6 that can be operated by a user via a central operating arrangement 12. The locking arrangement prevents displacement of the legs with respect to the elongated tubular element if in a locked resting state, and allows displacement of the legs and the elongated tubular element with respect to each other if in an unlocked state. The invention also relates to an assembly 100 that can comprise for example a piece of measurement equipment 101, a table leaf 102, a camera or a display that is connected with the stand according to the present invention.

It will be clear to a person skilled in the art that the scope of the present invention is not limited to the examples discussed in the foregoing but that several amendments and modifications thereof are possible without deviating from the scope of the present invention as defined by the attached claims. In particular, combinations of specific features of various aspects of the invention may be made. An aspect of the invention may be further advantageously enhanced by adding a feature that was described in relation to another aspect of the invention. While the present invention has been illustrated and described in detail in the figures and the description, such illustration and description are to be considered illustrative or exemplary only, and not restrictive.

The present invention is not limited to the disclosed embodiments. Variations to the disclosed embodiments can be understood and effected by a person skilled in the art in practicing the claimed invention, from a study of the figures, the description and the attached claims. In the claims, the word "comprising" does not exclude other steps or elements, and the indefinite article "a" or "an" does not exclude a plurality. The mere fact that certain measures are recited in mutually different dependent claims does not indicate that a combination of these measures cannot be used to advantage. Any reference numerals in the claims should not be construed as limiting the scope of the present invention.

## Claims

1. A height-adjustable multi-legged stand (1) for supporting an object at an adjustable height above a supporting surface on which the stand (1) is positionable, the stand (1) comprising:
- at least three legs (2, 3, 4), each leg comprising an elongated part (2a, 3a, 4a) having a longitudinal centerline, the longitudinal centerlines (3b, 4b) of the elongated parts (2a, 3a, 4a) of the at least three legs (2, 3, 4) being arranged parallel with respect to each other;
- an elongated tubular element (5) that is configured and arranged to at least partially envelop the elongated parts (2a, 3a, 4a) of the at least three legs (2, 3, 4), the elongated tubular element (5) having a longitudinal centerline (5a) that is arranged parallel to the longitudinal centerlines (3b, 4b) of the elongated parts (2a, 3a, 4a) of the at least three legs (2, 3, 4);
- a locking arrangement (6) that is arranged at least partially inside the elongated tubular element (5) and at least partially between the elongated parts (2a, 3a, 4a) of the at least three legs (2, 3, 4), the locking arrangement (6) comprising:
▪ a first set of at least two locking elements (7a, 7b);
▪ a first connecting element (8) that is arranged to extend in a radial direction of the elongated tubular element (5) and arranged to interconnect at least two locking elements (7a, 7b) of the first set of at least two locking elements;
▪ a first housing (9) that is arranged at least partially inside the elongated tubular element (5) and associated in a tenacious contact with an inner surface of the elongated tubular element (5), the first housing (9) being provided with:
o a first set of at least three leg guideways (10a, 10b, 10c, 10d), a leg guideway of the first set of at least three leg guideways being configured to:
• enclose at least a part of the elongated part of a respective leg of the at least three legs (2, 3, 4); and
• allow a guided displacement of the elongated part of the respective leg and the first housing (9) with respect to each other in response to a displacement of the elongated tubular element (5) by a user in an axial direction of the elongated tubular element (5) if the locking arrangement (6) is in an unlocked state;
▪ a first biasing element (11a) that is arranged in an axial direction of the elongated tubular element (5) between the first housing (9) and the first connecting element (8), the first biasing element (11a) being configured to maintain the first connecting element (8) and the first housing (9) at a first distance in an axial direction of the elongated tubular element (5) with respect to each other, thereby maintaining the locking arrangement (6) in a locked resting state;
▪ a central operating arrangement (12) comprising an elongated operating element (13) that is associated with the first connecting element (8), the central operating arrangement (12) being configured and arranged to allow:
o a first displacement of the elongated operating element (13) in a first axial direction of the elongated tubular element (5) in response to a manipulation of the central operating arrangement (12) by a user, thereby transferring the locking arrangement (6) from the locked resting state to the unlocked state; and
o a second displacement of the elongated operating element (13) in a second axial direction of the elongated tubular element (5) in response to a force exerted by the first biasing element (11a) on the first connecting element (8) and in the absence of the manipulation of the central operating arrangement (12) by a user, thereby transferring the locking arrangement (6) from the unlocked state to the locked resting state, the first displacement and the second displacement of the elongated operating element (13) being displacements in opposite directions;
wherein the first housing (9) further comprises a first set of at least two locking element guideways (14a, 14b), a locking element guideway of the first set of at least two locking element guideways being:
o configured to enclose at least a part of a respective locking element of the first set of at least two locking elements (7a, 7b);
o arranged to allow arranging the respective locking element opposite the elongated parts of two legs of the at least three legs, the two legs being neighboring legs as seen in a circumferential direction of the elongated tubular element (5); and
o provided with an inner surface that comprises at least a first portion that is configured and arranged to guide the respective locking element:
• away from the elongated parts of the two neighboring legs in response to said first displacement of the elongated operating element (13) and arrange the respective locking element at a first distance in a radial direction of the elongated tubular element (5) with respect to the elongated parts of the two neighboring legs thereby breaking locking contacts between the respective locking element and the elongated parts of the two neighboring legs; and
• towards the elongated parts of the two neighboring legs in a radial direction of the elongated tubular element (5) in response to said second displacement of the elongated operating element (13) to be associated with the elongated parts of the two neighboring legs, thereby establishing locking contacts between the respective locking element and the elongated parts of the two neighboring legs.

2. The height-adjustable multi-legged stand (1) according to claim 1, wherein a locking element of the first set of at least two locking elements (7a, 7b) has an outer surface that comprises a first portion that is matched to said at least first portion of the inner surface of the respective locking element guideway of the first set of at least two locking element guideways (14a, 14b) by which the locking element is at least partially enclosed, said at least first portion of the inner surface of the respective locking element guideway and said first portion of the outer surface of the locking element being arranged with respect to the longitudinal centerline of the elongated tubular element (5) at an angle α that is in a range from 5 degrees to 45 degrees.

3. The height-adjustable multi-legged stand (1) according to claim 2, wherein the locking contacts between a locking element of the first set of at least two locking elements (7a, 7b) and the elongated parts of the two legs that are neighboring legs in a circumferential direction of the elongated tubular element (5) comprise:
- a first locking contact between a first area of the outer surface of the locking element and a first area of an outer surface of the elongated part of a first leg of the two neighboring legs; and
- a second locking contact between a second area of the outer surface of the locking element and a second area of an outer surface of the elongated part of a second leg of the two neighboring legs;
wherein the first area and the second area of the outer surface of the locking element are outside of said first portion of the outer surface of the locking element.

4. The height-adjustable multi-legged stand (1) according to any one of the claims 1 to 3, wherein the first connecting element (8) is configured and arranged to allow:
- in response to said first displacement of the elongated operating element (13), simultaneously breaking:
▪ the locking contacts between a first locking element (7a) of the first set of at least two locking elements (7a, 7b) and a first set of two legs (3, 4) that are neighboring legs in a circumferential direction of the elongated tubular element (5); and
▪ the locking contacts between a second locking element (7b) of the first set of at least two locking elements (7a, 7b) and a second set of two legs (3, 4) that are neighboring legs in a circumferential direction of the elongated tubular element (5);
- in response to said second displacement of the elongated operating element (13), simultaneously establishing:
▪ the locking contacts between the first locking element (7a) of the first set of at least two locking elements (7a, 7b) and the first set of two neighboring legs (3, 4); and
▪ the locking contacts between the second locking element (7b) of the first set of at least two locking elements (7a, 7b) and the second set of two neighboring legs (3, 4).

5. The height-adjustable multi-legged stand (1) according to any one of the claims 1 to 4, wherein the locking contacts between a locking element of the first set of at least two locking elements (7a, 7b) and the elongated parts of two neighboring legs of the at least three legs are friction-based locking contacts.

6. The height-adjustable multi-legged stand (1) according to any one of the claims 1 to 5, wherein a locking element (7a) of the first set of at least two locking elements (7a, 7b) comprises a first wedge-shaped part (15a) that in response to said second displacement of the elongated operating element (13) and in cooperation with at least the first portion of the inner surface of the respective locking element guideway (14a) that is configured to enclose at least a part of the first wedge-shaped part (15a) is arranged in locking contact with the elongated parts (3a, 4a) of two neighboring legs (3, 4) of the at least three legs (2, 3, 4) thereby establishing said locking contacts.

7. The height-adjustable multi-legged stand (1) according to claim 6, wherein a locking element (7a) of the first set of at least two locking elements (7a, 7b) comprises a second wedge-shaped part (16a) that is configured and arranged to displace, in response to the first displacement of the elongated operating element (13), the locking element (7a) at least partially in a radial direction of the elongated tubular element (5) upon insertion of the second wedge-shaped part (16a) in a respective locking element guideway (14a) of the first set of at least two locking element guideways (14a, 14b) that is configured to enclose at least a part of the first wedge-shaped part (15a), thereby enabling arrangement of the locking element at a second distance in a radial direction of the elongated tubular element (5), said second distance being in the same direction as the first distance in the radial direction of the elongated tubular element (5) and said second distance being larger than said first distance.

8. The height-adjustable multi-legged stand (1) according to any one of the claims 1 to 7, wherein the locking arrangement (6) comprises:
- a second set of at least two locking elements (17a, 17b);
- a second connecting element (18) that is arranged to extend in a radial direction of the elongated tubular element (5) and arranged to interconnect at least two locking elements (17a, 17b) of the second set of at least two locking elements (17a, 17b), the first housing (9) being provided with a passage (19) that is configured and arranged to allow the elongated operating element (13) of the central operating arrangement (12) to extend past the first housing (9) to allow interconnection of the first connecting element (8) and the second connecting element (18) via the elongated operating element (13);
- a second housing (20) that is arranged at least partially inside the elongated tubular element (5) and associated in a tenacious contact with the inner surface of the elongated tubular element (5), the second housing (20) being arranged with respect to the first housing (9) at a second distance in an axial direction of the elongated tubular element (5), the second housing (20) being provided with:
▪ a second set of at least three leg guideways (21a, 21b, 21c, 21d), a leg guideway of the second set of at least three leg guideways being configured to:
o enclose at least a part of the elongated part of a respective leg of the at least three legs (2, 3, 4); and
o allow a guided displacement of the elongated part of the respective leg and the second housing (20) with respect to each other in response to a displacement of the elongated tubular element (5) by a user in an axial direction of the elongated tubular element (5) if the locking arrangement (6) is in the unlocked state;
- a second biasing element (11b) that is arranged in an axial direction of the elongated tubular element (5) between the second housing (20) and the second connecting element (18), the second biasing element (11b) being configured to maintain the second connecting element (18) and the second housing (20) at a third distance in an axial direction of the elongated tubular element (5) with respect to each other, thereby maintaining the locking arrangement (6) in the locked resting state;
wherein the second housing (20) further comprises a second set of at least two locking element guideways (22a, 22b), a locking element guideway of the second set of at least two locking element guideways being:
▪ configured to enclose at least a part of a respective locking element of the second set of at least two locking elements (17a, 17b);
▪ arranged to allow arranging the respective locking element opposite the elongated parts of two legs of the at least three legs (2, 3, 4), the two legs (3, 4) being neighboring legs as seen in a circumferential direction of the elongated tubular element (5); and
▪ provided with an inner surface that comprises at least a second portion that is configured and arranged to guide the respective locking element:
o away from the elongated parts of the two neighboring legs in response to said first displacement of the elongated operating element (13) and arrange the respective locking element at a third distance in a radial direction of the elongated tubular element (5) with respect to the elongated parts of the two neighboring legs thereby breaking locking contacts between the respective locking element and the elongated parts of the two neighboring legs; and
o towards the elongated parts of the two neighboring legs in a radial direction of the elongated tubular element (5) in response to said second displacement of the elongated operating element (13) to be associated with the elongated parts of the two neighboring legs, thereby establishing locking contacts between the respective locking element and the elongated parts of the two neighboring legs.

9. The height-adjustable multi-legged stand (1) according to claim 8, wherein a locking element of the second set of at least two locking elements (17a, 17b) has an outer surface that comprises a second portion that is matched to said at least second portion of the inner surface of the respective locking element guideway of the second set of at least two locking element guideways (22a, 22b) by which the locking element is at least partially enclosed, said at least second portion of the inner surface of the respective locking element guideway and said second portion of the outer surface of the locking element being arranged with respect to the longitudinal centerline (5a) of the elongated tubular element (5) at an angle β that is in a range from 5 degrees to 45 degrees.

10. The height-adjustable multi-legged stand (1) according to claim 9, wherein the locking contacts between a locking element of the second set of at least two locking elements (17a, 17b) and the elongated parts of two legs that are neighboring legs in a circumferential direction of the elongated tubular element (5) comprise:
- a third locking contact between a third area of the outer surface of the locking element and a third area of the outer surface of the elongated part of a first leg of the two neighboring legs; and
- a fourth locking contact between a fourth area of the outer surface of the locking element and a fourth area of the outer surface of the elongated part of a second leg of the two neighboring legs;
wherein the third area and the fourth area of the outer surface of the locking element are outside of said second portion of the outer surface of the locking element.

11. The height-adjustable multi-legged stand (1) according to claim 10 in its dependency on claim 3, wherein at least one of the first area and the second area of the outer surface of a locking element of the first set of at least two locking elements (7a, 7b) and/or at least one of the third area and the fourth area of the outer surface of a locking element of the second set of at least two locking elements (17a, 17b) and/or at least one of the first area and the third area of the outer surface of the elongated part of the first leg of the two neighboring legs and/or at least one of the second area and the fourth area of the outer surface of the elongated part of the second leg of the two neighboring legs is provided with a friction-enhancing material and/or a friction-enhancing surface profile.

12. The height-adjustable multi-legged stand (1) according to claim 10 in its dependency on claim 3 or according to claim 11, wherein a locking element of the first set of at least two locking elements (7a, 7b) and a locking element of the second set of at least two locking elements (17a, 17b) are arranged for establishing locking contacts with a same pair of neighboring legs of the at least three legs if the locking arrangement (6) is in the locked resting state, and wherein the first area and the third area of an outer surface of the elongated part of a first leg of the same pair of neighboring legs are arranged at different locations along a circumference of the first leg, and the second area and the fourth area of an outer surface of the elongated part of the second leg of the same pair of neighboring legs are arranged at different locations along a circumference of the second leg.

13. The height-adjustable multi-legged stand (1) according to any one of the claims 8 to 12, wherein the first connecting element (8) and the second connecting element (18) are configured and arranged to allow:
- in response to said first displacement of the elongated operating element (13), simultaneously breaking:
▪ the locking contacts between a locking element of the first set of at least two locking elements (7a, 7b) and the elongated parts of two neighboring legs of the at least three legs (2, 3, 4); and
▪ the locking contacts between a locking element of the second set of at least two locking elements (17a, 17b) and the elongated parts of two neighboring legs of the at least three legs (2, 3, 4); and
- in response to said second displacement of the elongated operating element (13), simultaneously establishing:
▪ the locking contacts between a locking element of the first set of at least two locking elements (7a, 7b) and the elongated parts of two neighboring legs of the at least three legs (2, 3, 4); and
▪ the locking contacts between a locking element of the second set of at least two locking elements (17a, 17b) and the elongated parts of two neighboring legs of the at least three legs (2, 3, 4).

14. The height-adjustable multi-legged stand (1) according to any one of the claims 8 to 13, wherein the locking contacts between a locking element of the first set of at least two locking elements (7a, 7b) and the elongated parts (3a, 4a) of two neighboring legs (3, 4) of the at least three legs (2, 3, 4), and the locking contacts between a locking element of the second set of at least two locking elements (17a, 17b) and the elongated parts (3a, 4a) of the two neighboring legs (3, 4) of the at least three legs (2, 3, 4) are friction-based locking contacts.

15. The height-adjustable multi-legged stand (1) according to any one of the claims 8 to 14, wherein a locking element (17a) of the second set of at least two locking elements (17a, 17b) comprises a third wedge-shaped part (23a) that in response to said second displacement of the elongated operating element (13) and in cooperation with at least the second portion of the inner surface of the respective locking element guideway that is configured to enclose at least a part of the third wedge-shaped part (23a) is arranged in locking contact with the elongated parts (3a, 4a) of two neighboring legs (3, 4) of the at least three legs (2, 3, 4), thereby establishing said locking contacts.

16. The height-adjustable multi-legged stand (1) according to claim 15, wherein a locking element (17a) of the second set of at least two locking elements (17a, 17b) comprises a fourth wedge-shaped part (24a) that is configured and arranged to displace, in response to the first displacement of the elongated operating element (13), the locking element (17a) at least partially in a radial direction of the elongated tubular element (5) upon insertion of the fourth wedge-shaped part (24a) in a respective locking element guideway (22a) of the second set of at least two locking element guideways (22a, 22b) that is configured to enclose at least a part of the third wedge-shaped part (23a), thereby enabling arrangement of the locking element (17a) at a fourth distance in a radial direction of the elongated tubular element (5), said fourth distance being in the same direction as the third distance in the radial direction of the elongated tubular element (5) and said fourth distance being larger than said third distance.

17. The height-adjustable multi-legged stand (1) according to any one of the claims 8 to 16, wherein the locking arrangement (6) comprises a fitting element (25a) and a third biasing element (11c) that is configured and arranged in an axial direction of the elongated tubular element (5) relative to the first housing (9) to keep the fitting element (25a) at least partially inserted in a respective leg guideway (10a) of the first set of at least three leg guideways (10a, 10b, 10c, 10d) and thereby in abutting contacts with the first housing (9) and the elongated part (4a) of a leg (4) of the at least three legs (2, 3, 4) that is at least partially enclosed by the respective leg guideway (10a), the fitting element (25a) being configured and arranged to be displaceable out of the respective leg guideway (10a) in at least an axial direction of the elongated tubular element (5) under influence of the first connecting element (8) in response to said first displacement of the elongated operating element (13).

18. The height-adjustable multi-legged stand (1) according to any one of the claims 1 to 17, wherein the central operating arrangement (12) comprises a control element (26) that is interconnected with the elongated operating element (13) via a transmission unit (27), the transmission unit (27) being configured and arranged to allow transferring:
- a first displacement of the control element (26) from a first resting position to a second activated position in response to a manipulation of the control element (26) by a user, into said first displacement of the elongated operating element (13) thereby transferring the locking arrangement (6) from the locked resting state to the unlocked state; and
- said second displacement of the elongated operating element (13), in the absence of the manipulation of the control element (26) by a user, into a second displacement of the control element (26) from the second activated position to the first resting position thereby transferring the locking arrangement (6) from the unlocked state to the locked resting state.

19. An assembly (100) comprising a height-adjustable multi-legged stand (1) according to any one of the claims 1 to 18.

## Patentansprüche

1. Ein höhenverstellbarer mehrbeiniger Ständer (1) zum Stützen eines Objekts in einer einstellbaren Höhe über einer Stützfläche, auf der der Ständer (1) positioniert werden kann, der Ständer (1) umfassend:
- mindestens drei Beine (2, 3, 4), wobei jedes Bein einen länglichen Teil (2a, 3a, 4a) mit einer Längsmittellinie umfasst, wobei die Längsmittellinien (3b, 4b) der länglichen Teile (2a, 3a, 4a) der mindestens drei Beine (2, 3, 4) parallel zueinander angeordnet sind;
- ein längliches röhrenförmiges Element (5), das konfiguriert und angeordnet ist um die länglichen Teile (2a, 3a, 4a) der mindestens drei Beine (2, 3, 4) zumindest teilweise zu umhüllen, wobei das längliche röhrenförmige Element (5) eine Längsmittellinie (5a) aufweist, die parallel zu den Längsmittellinien (3b, 4b) der länglichen Teile (2a, 3a, 4a) der mindestens drei Beine (2, 3, 4) angeordnet ist;
- eine Verriegelungsanordnung (6), die zumindest teilweise innerhalb des länglichen röhrenförmigen Elements (5) und zumindest teilweise zwischen den länglichen Teilen (2a, 3a, 4a) der mindestens drei Beine (2, 3, 4) angeordnet ist, die Verriegelungsanordnung (6) umfassend:
▪ einen ersten Satz von mindestens zwei Verriegelungselementen (7a, 7b);
▪ ein erstes Verbindungselement (8), das angeordnet ist um sich in einer radialen Richtung des länglichen rohrförmigen Elements (5) zu erstrecken und angeordnet ist um mindestens zwei Verriegelungselemente (7a, 7b) des ersten Satzes von mindestens zwei Verriegelungselementen miteinander zu verbinden;
▪ ein erstes Gehäuse (9), das zumindest teilweise innerhalb des länglichen röhrenförmigen Elements (5) angeordnet ist und in festem Kontakt mit einer Innenfläche des länglichen röhrenförmigen Elements (5) steht, wobei das erste Gehäuse (9) versehen ist mit:
∘ einem ersten Satz von mindestens drei Beinführungsbahnen (10a, 10b, 10c, 10d), wobei eine Beinführungsbahn des ersten Satzes von mindestens drei Beinführungsbahnen konfiguriert ist um:
• zumindest ein Teil des länglichen Teils eines jeweiligen Beins der mindestens drei Beine (2, 3, 4) zu umschließen; und
• eine geführte Verschiebung des länglichen Teils des jeweiligen Beins und des ersten Gehäuses (9) in Bezug zueinander als Reaktion auf eine Verschiebung des länglichen röhrenförmigen Elements (5) durch einen Benutzer in einer axialen Richtung des länglichen röhrenförmigen Elements (5) zu ermöglichen, wenn sich die Verriegelungsanordnung (6) in einem entriegelten Zustand befindet;
▪ ein erstes Vorspannelement (11a), das in axialer Richtung des länglichen röhrenförmigen Elements (5) zwischen dem ersten Gehäuse (9) und dem ersten Verbindungselement angeordnet ist (8), wobei das erste Vorspannelement (11a) konfiguriert ist um das erste Verbindungselement (8) und das erste Gehäuse (9) in einem ersten Abstand in einer axialen Richtung des länglichen rohrförmigen Elements (5) zueinander zu halten, wodurch die Verriegelungsanordnung (6) in einem verriegelten Ruhezustand gehalten wird;
▪ eine zentrale Bedienanordnung (12), die ein längliches Bedienelement (13) umfasst, das mit dem ersten Verbindungselement (8) verbunden ist, wobei die zentrale Bedienanordnung (12) konfiguriert und angeordnet ist um zu ermöglichen:
o eine erste Verschiebung des länglichen Bedienelements (13) in einer ersten axialen Richtung des länglichen rohrförmigen Elements (5) als Reaktion auf eine Manipulation der zentralen Bedienanordnung (12) durch einen Benutzer, wodurch die Verriegelungsanordnung (6) vom verriegelten Ruhezustand in den entriegelten Zustand überführt wird; und
o eine zweite Verschiebung des länglichen Bedienelements (13) in einer zweiten axialen Richtung des länglichen rohrförmigen Elements (5) als Reaktion auf eine vom ersten Vorspannelement (11a) auf das erste Verbindungselement (8) ausgeübte Kraft und ohne Manipulation der zentralen Bedienanordnung (12) durch einen Benutzer, wodurch die Verriegelungsanordnung (6) vom entriegelten Zustand in den verriegelten Ruhezustand überführt wird, wobei die erste Verschiebung und die zweite Verschiebung des länglichen Bedienelements (13) Verschiebungen in entgegengesetzte Richtungen sind;
wobei das erste Gehäuse (9) ferner einen ersten Satz von mindestens zwei Verriegelungselementführungsbahnen (14a, 14b) umfasst, wobei eine Verriegelungselementführungsbahn des ersten Satzes von mindestens zwei Verriegelungselementführungsbahnen:
∘ konfiguriert ist um zumindest einen Teil eines jeweiligen Verriegelungselements des ersten Satzes von mindestens zwei Verriegelungselementen (7a, 7b) zu umschließen;
o angeordnet ist um das jeweilige Verriegelungselement gegenüber den länglichen Teilen von zwei der mindestens drei Beine anzuordnen, wobei die beiden Beine in Umfangsrichtung des länglichen röhrenförmigen Elements (5) gesehen benachbarte Beine sind; und
o mit einer Innenfläche versehen ist, die mindestens einen ersten Abschnitt umfasst, der konfiguriert und angeordnet ist um das jeweilige Verriegelungselement zu führen:
• weg von den länglichen Teilen der beiden benachbarten Beine als Reaktion auf die erste Verschiebung des länglichen Bedienelements (13) und das jeweilige Verriegelungselement in einem ersten Abstand in einer radialen Richtung des länglichen röhrenförmigen Elements (5) in Bezug auf die länglichen Teile der beiden benachbarten Beine an zu ordnen, wodurch Verriegelungskontakte zwischen dem jeweiligen Verriegelungselement und den länglichen Teilen der beiden benachbarten Beine unterbrochen werden; und
• in Richtung der länglichen Teile der beiden benachbarten Beine in einer radialen Richtung des länglichen röhrenförmigen Elements (5) als Reaktion auf die zweite Verschiebung des länglichen Bedienelements (13), um mit den länglichen Teilen der beiden benachbarten Beine in Verbindung gebracht zu werden, wodurch Verriegelungskontakte zwischen dem jeweiligen Verriegelungselement und den länglichen Teilen der beiden benachbarten Beine hergestellt werden.

2. Der höhenverstellbare mehrbeinige Ständer (1) nach Anspruch 1, wobei ein Verriegelungselement des ersten Satzes von mindestens zwei Verriegelungselementen (7a, 7b) eine Außenfläche aufweist, die einen ersten Abschnitt umfasst, der an den mindestens ersten Abschnitt der Innenfläche der jeweiligen Verriegelungselementführungsbahn des ersten Satzes von mindestens zwei Verriegelungselementführungsbahnen (14a, 14b) angepasst ist, von denen das Verriegelungselement zumindest teilweise umschlossen ist, wobei der genannte mindestens erste Abschnitt der Innenfläche der jeweiligen Verriegelungselementführungsbahn und der genannte erste Abschnitt der Außenfläche des Verriegelungselements in Bezug auf die Längsmittellinie des länglichen röhrenförmigen Elements (5) in einem Winkel α angeordnet sind, der in einem Bereich von 5 Grad bis 45 Grad liegt.

3. Der höhenverstellbare mehrbeinige Ständer (1) nach Anspruch 2, wobei die Verriegelungskontakte zwischen einem Verriegelungselement des ersten Satzes von mindestens zwei Verriegelungselementen (7a, 7b) und den länglichen Teilen der beiden Beine, die in einer Umfangsrichtung des länglichen röhrenförmigen Elements (5) benachbarte Beine sind, umfassen:
- einen ersten Verriegelungskontakt zwischen einem ersten Bereich der Außenfläche des Verriegelungselements und einem ersten Bereich einer Außenfläche des länglichen Teils eines ersten Beins der beiden benachbarten Beine; und
- einen zweiten Verriegelungskontakt zwischen einem zweiten Bereich der Außenfläche des Verriegelungselements und einem zweiten Bereich einer Außenfläche des länglichen Teils eines zweiten Beins der beiden benachbarten Beine;
wobei der erste Bereich und der zweite Bereich der Außenfläche des Verriegelungselements außerhalb des ersten Abschnitts der Außenfläche des Verriegelungselements liegen.

4. Der höhenverstellbare mehrbeinige Ständer (1) nach einem der Ansprüche 1 bis 3, wobei das erste Verbindungselement (8) konfiguriert und angeordnet ist um zu ermöglichen:
- als Reaktion auf die erste Verschiebung des länglichen Bedienelements (13) gleichzeitiges Unterbrechen von:
▪ den Verriegelungskontakten zwischen einem ersten Verriegelungselement (7a) des ersten Satzes von mindestens zwei Verriegelungselementen (7a, 7b) und einem ersten Satz von zwei Beinen (3, 4), die in Umfangsrichtung des länglichen röhrenförmigen Elements (5) benachbarte Beine sind; und
▪ den Verriegelungskontakten zwischen einem zweiten Verriegelungselement (7b) des ersten Satzes von mindestens zwei Verriegelungselementen (7a, 7b) und einem zweiten Satz von zwei Beinen (3, 4), die in Umfangsrichtung des länglichen rohrförmigen Elements (5) benachbarte Beine sind;
- als Reaktion auf die zweite Verschiebung des länglichen Bedienelements (13) gleichzeitiges Herstellen von:
▪ den Verriegelungskontakten zwischen dem ersten Verriegelungselement (7a) des ersten Satzes von mindestens zwei Verriegelungselementen (7a, 7b) und dem ersten Satz von zwei benachbarten Beinen (3, 4); und
▪ den Verriegelungskontakten zwischen dem zweiten Verriegelungselement (7b) des ersten Satzes von mindestens zwei Verriegelungselementen (7a, 7b) und dem zweiten Satz von zwei benachbarten Beinen (3, 4).

5. Der höhenverstellbare mehrbeinige Ständer (1) nach einem der Ansprüche 1 bis 4, wobei die Verriegelungskontakte zwischen einem Verriegelungselement des ersten Satzes von mindestens zwei Verriegelungselementen (7a, 7b) und den länglichen Teilen zweier benachbarter Beine der mindestens drei Beine auf Reibung basierende Verriegelungskontakte sind.

6. Der höhenverstellbare mehrbeinige Ständer (1) nach einem der Ansprüche 1 bis 5, wobei ein Verriegelungselement (7a) des ersten Satzes von mindestens zwei Verriegelungselementen (7a,7b) ein erstes keilförmiges Teil (15a) umfasst, das in Reaktion auf die genannte zweite Verschiebung des länglichen Bedienelements (13) und in Zusammenwirkung mit zumindest dem ersten Abschnitt der Innenfläche der jeweiligen Verriegelungselementführungsbahn (14a), der konfiguriert ist um zumindest ein Teil des ersten keilförmigen Teils (15a) zu umschließen, in Verriegelungskontakt mit den länglichen Teilen (3a, 4a) zweier benachbarter Beine (3, 4) der mindestens drei Beine (2, 3, 4) angeordnet ist, wodurch die genannte Verriegelungskontakte hergestellt werden.

7. Der höhenverstellbare mehrbeinige Ständer (1) nach Anspruch 6, wobei ein Verriegelungselement (7a) des ersten Satzes von mindestens zwei Verriegelungselementen (7a, 7b) ein zweites keilförmiges Teil (16a) umfasst, das konfiguriert und angeordnet ist um als Reaktion auf die erste Verschiebung des länglichen Bedienelements (13) das Verriegelungselement (7a) zumindest teilweise in radialer Richtung des länglichen rohrförmigen Elements (5) zu verschieben, wenn das zweite keilförmige Teil (16a) in ein jeweiliges Verriegelungselementführungsbahn (14a) des ersten Satzes von mindestens zwei Verriegelungselementführungsbahnen (14a, 14b) eingesetzt wird, die konfiguriert ist um mindestens ein Teil des ersten keilförmigen Teils (15a) zu umschließen, wodurch die Anordnung des Verriegelungselements in einem zweiten Abstand in einer radialen Richtung des länglichen rohrförmigen Elements (5) ermöglicht wird, wobei der genannte zweite Abstand in der gleichen Richtung wie der erste Abstand in der radialen Richtung des länglichen rohrförmigen Elements (5) verläuft und der genannte zweite Abstand größer ist als der genannte erste Abstand.

8. Der höhenverstellbare mehrbeinige Ständer (1) nach einem der Ansprüche 1 bis 7, wobei die Verriegelungsanordnung (6) umfasst:
- einen zweiten Satz von mindestens zwei Verriegelungselementen (17a, 17b);
- ein zweites Verbindungselement (18), das angeordnet ist um sich in einer radialen Richtung des länglichen rohrförmigen Elements (5) zu erstrecken und angeordnet ist um mindestens zwei Verriegelungselemente (17a, 17b) des zweiten Satzes von mindestens zwei Verriegelungselementen (17a, 17b) miteinander zu verbinden, wobei das erste Gehäuse (9) mit einem Durchgang (19) versehen ist, der konfiguriert und angeordnet ist um es dem länglichen Bedienelement (13) der zentralen Bedienanordnung (12) zu ermöglichen, sich über das erste Gehäuse (9) hinaus zu erstrecken, um eine Verbindung des ersten Verbindungselements (8) und des zweiten Verbindungselements (18) über das längliche Bedienelement (13) zu ermöglichen;
- ein zweites Gehäuse (20), das zumindest teilweise innerhalb des länglichen rohrförmigen Elements (5) angeordnet ist und in festem Kontakt mit der Innenfläche des länglichen rohrförmigen Elements (5) steht, wobei das zweite Gehäuse (20) in Bezug auf das erste Gehäuse (9) in einem zweiten Abstand in einer axialen Richtung des länglichen rohrförmigen Elements (5) angeordnet ist, wobei das zweite Gehäuse (20) versehen ist mit:
▪ einem zweiten Satz von mindestens drei Beinführungsbahnen (21a, 21b, 21c, 21d), wobei eine Beinführungsbahn des zweiten Satzes von mindestens drei Beinführungsbahnen konfiguriert ist um:
∘ mindestens ein Teil des länglichen Teils eines jeweiligen Beins der mindestens drei Beine (2, 3, 4) zu umschließen; und
∘ eine geführte Verschiebung des länglichen Teils des jeweiligen Beins und des zweiten Gehäuses (20) in Bezug zueinander als Reaktion auf eine Verschiebung des länglichen röhrenförmigen Elements (5) durch einen Benutzer in einer axialen Richtung des länglichen röhrenförmigen Elements (5) zu ermöglichen, wenn sich die Verriegelungsanordnung (6) im entriegelten Zustand befindet;
- ein zweites Vorspannelement (11b), das in einer axialen Richtung des länglichen rohrförmigen Elements (5) zwischen dem zweiten Gehäuse (20) und dem zweiten Verbindungselement (18) angeordnet ist, wobei das zweite Vorspannelement (11b) konfiguriert ist um das zweite Verbindungselement (18) und das zweite Gehäuse (20) in einer dritten Abstand in einer axialen Richtung des länglichen rohrförmigen Elements (5) in Bezug zueinander zu halten, wodurch die Verriegelungsanordnung (6) im verriegelten Ruhezustand gehalten wird;
wobei das zweite Gehäuse (20) ferner einen zweiten Satz von mindestens zwei Verriegelungselementführungsbahnen (22a, 22b) umfasst, wobei eine Verriegelungselementführungsbahn des zweiten Satzes von mindestens zwei Verriegelungselementführungsbahnen ist:
▪ konfiguriert um zumindest ein Teil eines jeweiligen Verriegelungselements des zweiten Satzes von mindestens zwei Verriegelungselementen (17a, 17b) zu umschließen;
▪ angeordnet, um die Anordnung des jeweiligen Verriegelungselements gegenüber den länglichen Teilen von zwei Beinen der mindestens drei Beine (2, 3, 4) zu ermöglichen, wobei die beiden Beine (3, 4) in Umfangsrichtung des länglichen rohrförmigen Elements (5) gesehen benachbarte Beine sind; und
▪ versehen mit einer Innenfläche, die mindestens einen zweiten Abschnitt umfasst, der konfiguriert und angeordnet ist um das jeweilige Verriegelungselement zu führen:
o weg von den länglichen Teilen der beiden benachbarten Beine als Reaktion auf die erste Verschiebung des länglichen Bedienelements (13) und das jeweilige Verriegelungselement in einem dritten Abstand in radialer Richtung des länglichen röhrenförmigen Elements (5) in Bezug auf die länglichen Teile der beiden benachbarten Beine anzuordnen, wodurch Verriegelungskontakte zwischen dem jeweiligen Verriegelungselement und den länglichen Teilen der beiden benachbarten Beine unterbrochen werden; und
o in Richtung der länglichen Teile der beiden benachbarten Beine in radialer Richtung des länglichen röhrenförmigen Elements (5) als Reaktion auf die zweite Verschiebung des länglichen Bedienelements (13), um mit den länglichen Teilen der beiden benachbarten Beine in Verbindung gebracht zu werden, wodurch Verriegelungskontakte zwischen dem jeweiligen Verriegelungselement und den länglichen Teilen der beiden benachbarten Beine hergestellt werden.

9. Der höhenverstellbare mehrbeinige Ständer (1) nach Anspruch 8, wobei ein Verriegelungselement des zweiten Satzes von mindestens zwei Verriegelungselementen (17a, 17b) eine Außenfläche aufweist, die einen zweiten Abschnitt umfasst, der an den genannten mindestens zweiten Abschnitt der Innenfläche der jeweiligen Verriegelungselementführungsbahn des zweiten Satzes von mindestens zwei Verriegelungselementführungsbahnen (22a, 22b) angepasst ist, von denen das Verriegelungselement zumindest teilweise umschlossen ist, wobei der genannten mindestens zweite Abschnitt der Innenfläche der jeweiligen Verriegelungselementführungsbahn und der zweite Abschnitt der Außenfläche des Verriegelungselements in Bezug auf die Längsmittellinie (5a) des länglichen röhrenförmigen Elements (5) in einem Winkel β angeordnet sind, der in einem Bereich von 5 Grad bis 45 Grad liegt.

10. Der höhenverstellbare mehrbeinige Ständer (1) nach Anspruch 9, wobei die Verriegelungskontakte zwischen einem Verriegelungselement des zweiten Satzes von mindestens zwei Verriegelungselementen (17a, 17b) und den länglichen Teilen zweier Beine, die in einer Umfangsrichtung des länglichen röhrenförmigen Elements (5) benachbarte Beine sind, umfassen:
- einen dritten Verriegelungskontakt zwischen einem dritten Bereich der Außenfläche des Verriegelungselements und einem dritten Bereich der Außenfläche des länglichen Teils eines ersten Beins der beiden benachbarten Beine; und
- einen vierten Verriegelungskontakt zwischen einem vierten Bereich der Außenfläche des Verriegelungselements und einem vierten Bereich der Außenfläche des länglichen Teils eines zweiten Beins der beiden benachbarten Beine; wobei der dritte Bereich und der vierte Bereich der Außenfläche des Verriegelungselements außerhalb des zweiten Abschnitts der Außenfläche des Verriegelungselements liegen.

11. Der höhenverstellbare mehrbeinige Ständer (1) nach Anspruch 10 in seiner Abhängigkeit von Anspruch 3, wobei mindestens einer der ersten und zweiten Bereiche der Außenfläche eines Verriegelungselements des ersten Satzes von mindestens zwei Verriegelungselementen (7a, 7b) und/oder mindestens einer der dritten und vierten Bereiche der Außenfläche eines Verriegelungselements des zweiten Satzes von mindestens zwei Verriegelungselementen (17a, 17b) und/oder mindestens einer der ersten und dritten Bereiche der Außenfläche des länglichen Teils des ersten Beins der beiden benachbarten Beine und/oder mindestens einer der zweiten und vierten Bereiche der Außenfläche des länglichen Teils des zweiten Beins der beiden benachbarten Beine mit einem reibungserhöhenden Material und/oder einem reibungserhöhenden Oberflächenprofil versehen ist.

12. Der höhenverstellbare mehrbeinige Ständer (1) nach Anspruch 10 in seiner Abhängigkeit von Anspruch 3 oder gemäß Anspruch 11, wobei ein Verriegelungselement des ersten Satzes von mindestens zwei Verriegelungselementen (7a, 7b) und ein Verriegelungselement des zweiten Satzes von mindestens zwei Verriegelungselementen (17a, 17b) angeordnet sind um Verriegelungskontakte mit einemselben Paar benachbarter Beine der mindestens drei Beine herzustellen, wenn sich die Verriegelungsanordnung (6) im verriegelten Ruhezustand befindet, und wobei der erste Bereich und der dritte Bereich einer Außenfläche des länglichen Teils eines ersten Beins desselben Paars benachbarter Beine an verschiedenen Stellen entlang eines Umfangs des ersten Beins angeordnet sind und der zweite Bereich und der vierte Bereich einer Außenfläche des länglichen Teils des zweiten Beins desselben Paars benachbarter Beine an verschiedenen Stellen entlang eines Umfangs des zweiten Beins angeordnet sind.

13. Der höhenverstellbare mehrbeinige Ständer (1) nach einem der Ansprüche 8 bis 12, wobei das erste Verbindungselement (8) und das zweite Verbindungselement (18) konfiguriert und angeordnet sind um zu ermöglichen:
- als Reaktion auf die erste Verschiebung des länglichen Bedienelements (13) gleichzeitiges Unterbrechen von:
▪ den Verriegelungskontakten zwischen einem Verriegelungselement des ersten Satzes von mindestens zwei Verriegelungselementen (7a, 7b) und den länglichen Teilen zweier benachbarter Beine der mindestens drei Beine (2, 3, 4); und
▪ den Verriegelungskontakten zwischen einem Verriegelungselement des zweiten Satzes von mindestens zwei Verriegelungselementen (17a, 17b) und den länglichen Teilen zweier benachbarter Beine der mindestens drei Beine (2, 3, 4); und
- als Reaktion auf die zweite Verschiebung des länglichen Bedienelements (13) gleichzeitiges Herstellen von:
▪ den Verriegelungskontakten zwischen einem Verriegelungselement des ersten Satzes von mindestens zwei Verriegelungselementen (7a, 7b) und den länglichen Teilen zweier benachbarter Beine der mindestens drei Beine (2, 3, 4); und
▪ den Verriegelungskontakten zwischen einem Verriegelungselement des zweiten Satzes von mindestens zwei Verriegelungselementen (17a, 17b) und den länglichen Teilen zweier benachbarter Beine der mindestens drei Beine (2, 3, 4).

14. Der höhenverstellbare mehrbeinige Ständer (1) nach einem der Ansprüche 8 bis 13, wobei die Verriegelungskontakte zwischen einem Verriegelungselement des ersten Satzes von mindestens zwei Verriegelungselementen (7a, 7b) und den länglichen Teilen (3a, 4a) zweier benachbarter Beine (3, 4) der mindestens drei Beine (2, 3, 4) und die Verriegelungskontakte zwischen einem Verriegelungselement des zweiten Satzes von mindestens zwei Verriegelungselementen (17a, 17b) und den länglichen Teilen (3a, 4a) der zwei benachbarten Beine (3, 4) der mindestens drei Beine (2, 3, 4) reibungsbasierte Verriegelungskontakte sind.

15. Der höhenverstellbare mehrbeinige Ständer (1) nach einem der Ansprüche 8 bis 14, wobei ein Verriegelungselement (17a) des zweiten Satzes von mindestens zwei Verriegelungselementen (17a, 17b) ein drittes keilförmiges Teil (23a) umfasst, das als Reaktion auf die zweite Verschiebung des länglichen Bedienelements (13) und in Zusammenwirkung mit mindestens dem zweiten Abschnitt der Innenfläche der jeweiligen Verriegelungselementführungsbahn, der konfiguriert ist um mindestens ein Teil des dritten keilförmigen Teils (23a) zu umschließen, in Verriegelungskontakt mit den länglichen Teilen (3a, 4a) zweier benachbarter Beine (3, 4) der mindestens drei Beine (2, 3, 4) angeordnet ist, wodurch die genannte Verriegelungskontakte hergestellt werden.

16. Der höhenverstellbare mehrbeinige Ständer (1) nach Anspruch 15, wobei ein Verriegelungselement (17a) des zweiten Satzes von mindestens zwei Verriegelungselementen (17a, 17b) ein viertes keilförmiges Teil (24a) umfasst, das konfiguriert und angeordnet ist um als Reaktion auf die erste Verschiebung des länglichen Bedienelements (13) das Verriegelungselement (17a) zumindest teilweise in einer radialen Richtung des länglichen rohrförmigen Elements (5) zu verschieben, wenn das vierte keilförmige Teil (24a) in eine jeweilige Verriegelungselementführungsbahn (22a) des zweiten Satzes von mindestens zwei Verriegelungselementführungsbahnen (22a, 22b) eingesetzt wird, die konfiguriert ist um zumindest ein Teil des dritten keilförmigen Teils (23a) zu umschließen, wodurch die Anordnung des Verriegelungselements (17a) in einem vierten Abstand in einer radialen Richtung des länglichen rohrförmigen Elements (5) ermöglicht wird, wobei der genannte vierte Abstand in der gleichen Richtung liegt wie der dritte Abstand in der radialen Richtung des länglichen rohrförmigen Elements (5) und der genannte vierte Abstand größer ist als der genannte dritte Abstand.

17. Der höhenverstellbare mehrbeinige Ständer (1) nach einem der Ansprüche 8 bis 16, wobei die Verriegelungsanordnung (6) ein Passelement (25a) und ein drittes Vorspannelement (11c) umfasst, das konfiguriert und angeordnet ist in einer axialen Richtung des länglichen röhrenförmigen Elements (5) in Bezug auf das erste Gehäuse (9) um das Passelement (25a) zumindest teilweise in einer jeweiligen Beinführungsbahn (10a) des ersten Satzes von mindestens drei Beinführungsbahnen (10a, 10b, 10c, 10d) eingesetzt und dadurch in Anlagekontakt mit dem ersten Gehäuse (9) und dem länglichen Teil (4a) eines Beins (4) der mindestens drei Beine (2, 3, 4) zu halten, das zumindest teilweise von der jeweiligen Beinführungsbahn (10a) umschlossen ist, wobei das Passelement (25a) konfiguriert und angeordnet ist um aus der jeweiligen Beinführungsbahn (10a) herausgeschoben werden zu können zumindest in einer axialen Richtung des länglichen röhrenförmigen Elements (5) unter Einfluss des ersten Verbindungselements (8) als Reaktion auf die genannte erste Verschiebung des länglichen Bedienelements (13).

18. Der höhenverstellbare mehrbeinige Ständer (1) nach einem der Ansprüche 1 bis 17, wobei die zentrale Bedienanordnung (12) ein Steuerelement (26) umfasst, das über eine Übertragungseinheit (27) mit dem länglichen Bedienelement (13) verbunden ist, wobei die Übertragungseinheit (27) konfiguriert und angeordnet ist um die Übertragung zu ermöglichen von:
- einer ersten Verschiebung des Steuerelements (26) aus einer ersten Ruheposition in eine zweite aktivierte Position als Reaktion auf eine Manipulation des Steuerelements (26) durch einen Benutzer, in die genannte erste Verschiebung des länglichen Bedienelements (13), wodurch die Verriegelungsanordnung (6) aus dem verriegelten Ruhezustand in den entriegelten Zustand überführt wird; und
- der genannten zweiten Verschiebung des länglichen Bedienelements (13), in Abwesenheit einer Manipulation des Steuerelements (26) durch einen Benutzer, in eine zweite Verschiebung des Steuerelements (26) von der zweiten aktivierten Position in die erste Ruheposition, wodurch die Verriegelungsanordnung (6) vom entriegelten Zustand in den verriegelten Ruhezustand überführt wird.

19. Eine Anordnung (100) umfassend ein höhenverstellbarer mehrbeiniger Ständer (1) nach einem der Ansprüche 1 bis 18.

## Revendications

1. Un support multi-jambes réglable en hauteur (1) pour supporter un objet à une hauteur réglable au-dessus d'une surface de support sur laquelle le support (1) peut être positionné, le support (1) comprenant:
- au moins trois jambes (2, 3, 4), chaque jambe comprenant une partie allongée (2a, 3a, 4a) présentant une ligne médiane longitudinale, les lignes médianes longitudinales (3b, 4b) des parties allongées (2a, 3a, 4a) des au moins trois jambes (2, 3, 4) étant agencés parallèlement les uns aux autres;
- un élément tubulaire allongé (5) qui est configuré et agencé de façon à envelopper au moins partiellement les parties allongées (2a, 3a, 4a) des au moins trois jambes (2, 3, 4), l'élément tubulaire allongé (5) présentant une ligne médiane longitudinale (5a) qui est agencé parallèlement aux lignes médianes longitudinales (3b, 4b) des parties allongées (2a, 3a, 4a) des au moins trois jambes (2, 3, 4);
- un dispositif de verrouillage (6) agencé au moins partiellement à l'intérieur de l'élément tubulaire allongé (5) et au moins partiellement entre les parties allongées (2a, 3a, 4a) des au moins trois jambes (2, 3, 4), le dispositif de verrouillage (6) comprenant:
▪ un premier ensemble d'au moins deux éléments de verrouillage (7a, 7b);
▪ un premier élément de liaison (8) qui est agencé pour s'étendre dans une direction radiale de l'élément tubulaire allongé (5) et agencé pour interconnecter au moins deux éléments de verrouillage (7a, 7b) du premier ensemble d'au moins deux éléments de verrouillage;
▪ un premier boîtier (9) qui est agencé au moins partiellement à l'intérieur de l'élément tubulaire allongé (5) et associé en contact tenace avec une surface intérieure de l'élément tubulaire allongé (5), le premier boîtier (9) étant pourvu de:
∘ un premier ensemble d'au moins trois glissières de guidage de jambe (10a, 10b, 10c, 10d), une glissière de guidage de jambe du premier ensemble d'au moins trois glissières de guidage de jambe étant configurée pour:
• entourer au moins une partie de la partie allongée d'une jambe respective des au moins trois jambes (2, 3, 4); et
• permettre un déplacement guidé de la partie allongée de la jambe respective et du premier boîtier (9) l'un par rapport à l'autre en réponse à un **déplacement** de l'élément tubulaire allongé (5) par un utilisateur dans une direction axiale de l'élément tubulaire allongé (5) si le dispositif de verrouillage (6) est dans un état déverrouillé;
▪ un premier élément de polarisation (11a) qui est agencé dans une direction axiale de l'élément tubulaire allongé (5) entre le premier boîtier (9) et le premier élément de liaison (8), le premier élément de polarisation (11a) étant configuré pour maintenir le premier l'élément de liaison (8) et le premier boîtier (9) à une première distance dans une direction axiale de l'élément tubulaire allongé (5) l'un par rapport à l'autre, maintenant ainsi le dispositif de verrouillage (6) dans un état de repos verrouillé;
▪ un dispositif de commande central (12) comprenant un élément de commande allongé (13) qui est associé au premier élément de liaison (8), le dispositif de commande central (12) étant configuré et agencé pour permettre:
∘ un premier déplacement de l'élément de commande allongé (13) dans une première direction axiale de l'élément tubulaire allongé (5) en réponse à une manipulation du dispositif de commande central (12) par un utilisateur, transférant ainsi le dispositif de verrouillage (6) de l'état de repos verrouillé à l'état déverrouillé; et
∘ un second déplacement de l'élément de commande allongé (13) dans une seconde direction axiale de l'élément tubulaire allongé (5) en réponse à une force exercée par le premier élément de polarisation (11a) sur le premier élément de liaison (8) et en l'absence de manipulation du dispositif de commande central (12) par un utilisateur, transférant ainsi le dispositif de verrouillage (6) de l'état déverrouillé à l'état de repos verrouillé, le premier déplacement et le second déplacement de l'élément de commande allongé (13) étant des déplacements dans des directions opposées;
dans lequel le premier boîtier (9) comprend en outre un premier ensemble d'au moins deux glissières de guidage d'élément de verrouillage (14a, 14b), une glissière de guidage d'élément de verrouillage du premier ensemble d'au moins deux glissières de guidage d'élément de verrouillage étant:
∘ configurée pour entourer au moins une partie d'un élément de verrouillage respectif du premier ensemble d'au moins deux éléments de verrouillage (7a, 7b);
∘ agencé pour permettre de disposer l'élément de verrouillage respectif en regard des parties allongées de deux des au moins trois jambes, les deux jambes étant des jambes voisines vues dans une direction circonférentielle de l'élément tubulaire allongé (5); et
∘ pourvu d'une surface intérieure qui comprend au moins une première part configurée et agencée pour guider l'élément de verrouillage respectif:
• loin des parties allongées des deux jambes voisines en réponse audit premier déplacement de l'élément de commande allongé (13) et agencer l'élément de verrouillage respectif à une première distance dans une direction radiale de l'élément tubulaire allongé (5) par rapport aux parties allongées des deux jambes voisines, rompant ainsi des contacts de verrouillage entre l'élément de verrouillage respectif et les parties allongées des deux jambes voisines; et
• vers les parties allongées des deux jambes voisines dans une direction radiale de l'élément tubulaire allongé (5) en réponse audit second déplacement de l'élément de commande allongé (13) à associer aux parties allongées des deux jambes voisines, établissant ainsi des contacts de verrouillage entre l'élément de verrouillage respectif et les parties allongées des deux jambes voisines.

2. Le support multi-jambes réglable en hauteur (1) selon la revendication 1, dans lequel un élément de verrouillage du premier ensemble d'au moins deux éléments de verrouillage (7a, 7b) présente une surface extérieure qui comprend une première part qui est adaptée à ladite au moins première part de la surface intérieure de la glissière de guidage d'élément de verrouillage respectif du premier ensemble d'au moins deux glissières de guidage d'élément de verrouillage par lesquels l'élément de verrouillage est au moins partiellement entouré, ladite au moins première part de la surface intérieure de la glissière de guidage d'élément de verrouillage respectif et ladite première part de la surface extérieure de l'élément de verrouillage étant agencées par rapport à la ligne médiane longitudinale de l'élément tubulaire allongé (5) à un angle α qui est dans une plage de 5 degrés à 45 degrés.

3. Le support multi-jambes réglable en hauteur (1) selon la revendication 2, dans lequel les contacts de verrouillage entre un élément de verrouillage du premier ensemble d'au moins deux éléments de verrouillage (7a, 7b) et les parties allongées des deux jambes qui sont des jambes voisins dans une direction circonférentielle de l'élément tubulaire allongé (5) comprennent:
- un premier contact de verrouillage entre une première zone de la surface extérieure de l'élément de verrouillage et une première zone d'une surface extérieure de la partie allongée d'une première jambe des deux jambes voisines; et
- un deuxième contact de verrouillage entre une deuxième zone de la surface extérieure de l'élément de verrouillage et une deuxième zone d'une surface extérieure de la partie allongée d'une deuxième jambe des deux jambes voisines;
dans lequel la première zone et la deuxième zone de la surface extérieure de l'élément de verrouillage sont à l'extérieur de ladite première part de la surface extérieure de l'élément de verrouillage.

4. Le support multi-jambes réglable en hauteur (1) selon l'une quelconque des revendications 1 à 3, dans lequel le premier élément de liaison (8) est configuré et agencé pour permettre:
- en réponse audit premier déplacement de l'élément de commande allongé (13), rompre simultanément:
▪ les contacts de verrouillage entre un premier élément de verrouillage (7a) du premier ensemble d'au moins deux éléments de verrouillage (7a, 7b) et un premier ensemble de deux jambes (3, 4) qui sont des jambes voisines dans une direction circonférentielle de l'élément tubulaire allongé (5); et
▪ les contacts de verrouillage entre un deuxième élément de verrouillage (7b) du premier ensemble d'au moins deux éléments de verrouillage (7a, 7b) et un deuxième ensemble de deux jambes (3, 4) qui sont des jambes voisines dans une direction circonférentielle de l'élément tubulaire allongé (5);
- en réponse audit second déplacement de l'élément de commande allongé (13), établir simultanément:
▪ les contacts de verrouillage entre le premier élément de verrouillage (7a) du premier ensemble d'au moins deux éléments de verrouillage (7a, 7b) et le premier ensemble de deux jambes voisines (3, 4); et
▪ les contacts de verrouillage entre le deuxième élément de verrouillage (7b) du premier ensemble d'au moins deux éléments de verrouillage (7a, 7b) et le deuxième ensemble de deux jambes voisines (3, 4).

5. Le support multi-jambes réglable en hauteur (1) selon l'une quelconque des revendications 1 à 4, dans lequel les contacts de verrouillage entre un élément de verrouillage du premier ensemble d'au moins deux éléments de verrouillage (7a, 7b) et les parties allongées de deux jambes voisines des au moins trois jambes sont des contacts de verrouillage à friction.

6. Le support multi-jambes réglable en hauteur (1) selon l'une quelconque des revendications 1 à 5, dans lequel un élément de verrouillage (7a) du premier ensemble d'au moins deux éléments de verrouillage (7a, 7b) comprend une première partie en forme de coin (15a) qui, en réponse audit second déplacement de l'élément de commande allongé (13) et en coopération avec au moins la première part de la surface intérieure de la glissière de guidage d'élément de verrouillage respectif (14a) qui est configuré pour entourer au moins une partie de la première partie en forme de coin (15a), est agencée en contact de verrouillage avec les parties allongées (3a, 4a) de deux jambes voisines (3, 4) des au moins trois jambes (2, 3, 4), établissant ainsi lesdits contacts de verrouillage.

7. Le support multi-jambes réglable en hauteur (1) selon la revendication 6, dans lequel un élément de verrouillage (7a) du premier ensemble d'au moins deux éléments de verrouillage (7a, 7b) comprend une seconde partie en forme de coin (16a) qui est configurée et agencée pour déplacer, en réponse au premier déplacement de l'élément de commande allongé (13), l'élément de verrouillage (7a) au moins partiellement dans une direction radiale de l'élément tubulaire allongé (5) lors de l'insertion de la seconde partie en forme de coin (16a) dans une glissière de guidage d'élément de verrouillage respectif (14a) du premier ensemble d'au moins deux glissières de guidage d'élément de verrouillage (14a, 14b) qui est configurée pour entourer au moins une partie de la première partie en forme de coin (15a), permettant ainsi le disposition de l'élément de verrouillage à une seconde distance dans une direction radiale de l'élément tubulaire allongé (5), ladite seconde distance étant dans la même direction que la première distance dans la direction radiale de l'élément tubulaire allongé (5) et ladite seconde distance étant plus grande que ladite première distance.

8. Le support multi-jambes réglable en hauteur (1) selon l'une quelconque des revendications 1 à 7, dans lequel le dispositif de verrouillage (6) comprend:
- un deuxième ensemble d'au moins deux éléments de verrouillage (17a, 17b);
- un deuxième élément de liaison (18) qui est agencé pour s'étendre dans une direction radiale de l'élément tubulaire allongé (5) et agencé pour interconnecter au moins deux éléments de verrouillage (17a, 17b) du deuxième ensemble d'au moins deux éléments de verrouillage (17a, 17b), le premier boîtier (9) étant pourvu d'un passage (19) qui est configuré et agencé pour permettre à l'élément de commande allongé (13) du dispositif de commande central (12) de s'étendre au-delà du premier boîtier (9) pour permettre l'interconnexion du premier élément de liaison (8) et du deuxième élément de liaison (18) via l'élément de commande allongé (13);
- un second boîtier (20) agencé au moins partiellement à l'intérieur de l'élément tubulaire allongé (5) et en contact tenace avec la surface intérieure de l'élément tubulaire allongé (5), le second boîtier (20) étant agencé par rapport au premier boîtier (9) à une seconde distance dans la direction axiale de l'élément tubulaire allongé (5), le second boîtier (20) étant pourvu:
▪ d'un deuxième ensemble d'au moins trois glissières de guidage de jambe (21a, 21b, 21c, 21d), une glissière de guidage de jambe du deuxième ensemble d'au moins trois glissières de guidage de jambe étant configurée pour:
∘ entourer au moins une partie de la partie allongée d'une jambe respective des au moins trois jambes (2, 3, 4); et
∘ permettre un déplacement guidé de la partie allongée de la jambe respective et du deuxième boîtier (20) l'un par rapport à l'autre en réponse à un déplacement de l'élément tubulaire allongé (5) par un utilisateur dans une direction axiale de l'élément tubulaire allongé (5) si le dispositif de verrouillage (6) est dans l'état déverrouillé;
- un deuxième élément de polarisation (11b) qui est agencé dans une direction axiale de l'élément tubulaire allongé (5) entre le deuxième boîtier (20) et le deuxième élément de liaison (18), le deuxième élément de polarisation (11b) étant configuré pour maintenir le deuxième élément de liaison (18) et le deuxième boîtier (20) à une troisième distance axiale de l'élément tubulaire allongé (5) l'un par rapport à l'autre, maintenant ainsi le dispositif de verrouillage (6) à l'état de repos verrouillé;
dans lequel le second boîtier (20) comprenant en outre un second ensemble d'au moins deux glissières de guidage de verrouillage (22a, 22b), une glissière de guidage de verrouillage du second ensemble d'au moins deux glissières de guidage de verrouillage étant:
▪ configuré pour entourer au moins une partie d'un élément de verrouillage respectif du deuxième ensemble d'au moins deux éléments de verrouillage (17a, 17b);
▪ agencé pour permettre de disposer l'élément de verrouillage respectif en regard des parties allongées de deux jambes des au moins trois jambes (2, 3, 4), les deux jambes (3, 4) étant des jambes voisines vues dans une direction circonférentielle de l'élément tubulaire allongé (5); et
▪ pourvu d'une surface intérieure qui comprend au moins une deuxième part qui est configurée et agencée pour guider l'élément de verrouillage respectif:
∘ loin des parties allongées des deux jambes voisines en réponse audit premier déplacement de l'élément de commande allongé (13) et agencer l'élément de verrouillage respectif à une troisième distance dans une direction radiale de l'élément tubulaire allongé (5) par rapport aux parties allongées des deux jambes voisines, rompant ainsi des contacts de verrouillage entre l'élément de verrouillage respectif et les parties allongées des deux jambes voisines; et
∘ vers les parties allongées des deux jambes voisines dans une direction radiale de l'élément tubulaire allongé (5) en réponse audit deuxième déplacement de l'élément de commande allongé (13) pour être associé aux parties allongées des deux jambes voisines, établissant ainsi des contacts de verrouillage entre l'élément de verrouillage respectif et les parties allongées des deux jambes voisines.

9. Le support multi-jambes réglable en hauteur (1) selon la revendication 8, dans lequel un élément de verrouillage du second ensemble d'au moins deux éléments de verrouillage (17a, 17b) présente une surface extérieure qui comprend une seconde part qui est adaptée à ladite au moins seconde part de la surface intérieure de la glissière de guidage de verrouillage respective du second ensemble d'au moins deux glissières de guidage de verrouillage (22a, 22b) par lesquels l'élément de verrouillage est au moins partiellement entouré, ladite au moins seconde part de la surface intérieure de la glissière de guidage de verrouillage respective et ladite seconde part de la surface extérieure de l'élément de verrouillage étant agencées par rapport à la ligne médiane longitudinale (5a) de l'élément tubulaire allongé (5) à un angle β qui est dans une plage de 5 degrés à 45 degrés.

10. Le support multi-jambes réglable en hauteur (1) selon la revendication 9, dans lequel les contacts de verrouillage entre un élément de verrouillage du second ensemble d'au moins deux éléments de verrouillage (17a, 17b) et les parties allongées de deux jambes voisins dans une direction circonférentielle de l'élément tubulaire allongé (5) comprennent:
- un troisième contact de verrouillage entre une troisième zone de la surface extérieure de l'élément de verrouillage et une troisième zone de la surface extérieure de la partie allongée d'une première jambe des deux jambes voisines; et
- un quatrième contact de verrouillage entre une quatrième zone de la surface extérieure de l'élément de verrouillage et une quatrième zone de la surface extérieure de la partie allongée d'une deuxième jambe des deux jambes voisines;
dans lequel la troisième zone et la quatrième zone de la surface extérieure de l'élément de verrouillage sont à l'extérieur de ladite deuxième part de la surface extérieure de l'élément de verrouillage.

11. Le support multi-jambes réglable en hauteur (1) selon la revendication 10 dans sa dépendance à la revendication 3, dans lequel au moins une de la première zone et de la deuxième zone de la surface extérieure d'un élément de verrouillage du premier ensemble d'au moins deux éléments de verrouillage (7a, 7b) et/ou au moins une de la troisième zone et de la quatrième zone de la surface extérieure d'un élément de verrouillage du deuxième ensemble d'au moins deux éléments de verrouillage (17a, 17b) et/ou au moins une de la première zone et de la troisième zone de la surface extérieure de la partie allongée du premier jambe des deux jambes voisins et/ou au moins une de la deuxième zone et de la quatrième zone de la surface extérieure de la partie allongée du deuxième jambe des deux jambes voisins est pourvue d'un matériau améliorant le frottement et/ou d'un profil de surface améliorant le frottement.

12. Le support multi-jambes réglable en hauteur (1) selon la revendication 10 dans sa dépendance à la revendication 3 ou selon la revendication 11, dans lequel un élément de verrouillage du premier ensemble d'au moins deux éléments de verrouillage (7a, 7b) et un élément de verrouillage du deuxième ensemble d'au moins deux éléments de verrouillage (17a, 17b) sont agencés pour établir des contacts de verrouillage avec une même paire de jambes voisins des au moins trois jambes si le dispositif de verrouillage (6) est dans l'état de repos verrouillé, et dans lequel la première zone et la troisième zone d'une surface extérieure de la partie allongée d'un premier jambe de la même paire de jambes voisins sont agencées à des emplacements différents le long d'une circonférence du premier jambe, et la deuxième zone et la quatrième zone d'une surface extérieure de la partie allongée du deuxième jambe de la même paire de jambes voisins sont agencées à des emplacements différents le long d'une circonférence du deuxième jambe.

13. Le support multi-jambes réglable en hauteur (1) selon l'une quelconque des revendications 8 à 12, dans lequel le premier élément de liaison (8) et le deuxième élément de liaison (18) sont configurés et agencés pour permettre:
- en réponse audit premier déplacement de l'élément de commande allongé (13), rompre simultanément:
▪ les contacts de verrouillage entre un élément de verrouillage du premier ensemble d'au moins deux éléments de verrouillage (7a, 7b) et les parties allongées de deux jambes voisines des au moins trois jambes (2, 3, 4); et
▪ les contacts de verrouillage entre un élément de verrouillage du deuxième ensemble d'au moins deux éléments de verrouillage (17a, 17b) et les parties allongées de deux jambes voisines des au moins trois jambes (2, 3, 4); et
- en réponse audit second déplacement de l'élément de commande allongé (13), établir simultanément:
▪ les contacts de verrouillage entre un élément de verrouillage du premier ensemble d'au moins deux éléments de verrouillage (7a, 7b) et les parties allongées de deux jambes voisines des au moins trois jambes (2, 3, 4); et
▪ les contacts de verrouillage entre un élément de verrouillage du deuxième ensemble d'au moins deux éléments de verrouillage (17a, 17b) et les parties allongées de deux jambes voisines des au moins trois jambes (2, 3, 4).

14. Le support multi-jambes réglable en hauteur (1) selon l'une quelconque des revendications 8 à 13, dans lequel les contacts de verrouillage entre un élément de verrouillage du premier ensemble d'au moins deux éléments de verrouillage (7a, 7b) et les parties allongées (3a, 4a) de deux jambes voisins (3, 4) des au moins trois jambes (2, 3, 4), et les contacts de verrouillage entre un élément de verrouillage du deuxième ensemble d'au moins deux éléments de verrouillage (17a, 17b) et les parties allongées (3a, 4a) des deux jambes voisins (3, 4) des au moins trois jambes (2, 3, 4) sont des contacts de verrouillage à friction.

15. Le support multi-jambes réglable en hauteur (1) selon l'une quelconque des revendications 8 à 14, dans lequel un élément de verrouillage (17a) du deuxième ensemble d'au moins deux éléments de verrouillage (17a, 17b) comprend une troisième partie en forme de coin (23a) qui, en réponse audit deuxième déplacement de l'élément de commande allongé (13) et en coopération avec au moins la deuxième part de la surface intérieure de la glissière de guidage de verrouillage respective qui est configuré pour entourer au moins une partie de la troisième partie en forme de coin (23a), est agencée en contact de verrouillage avec les parties allongées (3a, 4a) de deux jambes voisins (3, 4) des au moins trois jambes (2, 3, 4), établissant ainsi lesdits contacts de verrouillage.

16. Le support multi-jambes réglable en hauteur (1) selon la revendication 15, dans lequel un élément de verrouillage (17a) du deuxième ensemble d'au moins deux éléments de verrouillage (17a, 17b) comprend une quatrième partie en forme de coin (24a) configurée et agencée pour déplacer, en réponse au premier déplacement de l'élément de commande allongé (13), l'élément de verrouillage (17a) au moins partiellement dans la direction radiale de l'élément tubulaire allongé (5) lors de l'insertion de la quatrième partie en forme de coin (24a) dans une glissière de guidage de verrouillage respective (22a) du second ensemble d'au moins deux glissières de guidage de verrouillage (22a, 22b) qui est configuré pour entourer au moins une partie de la troisième partie en forme de coin (23a), permettant ainsi le disposition de l'élément de verrouillage (17a) à une quatrième distance dans la direction radiale de l'élément tubulaire allongé (5), ladite quatrième distance étant dans la même direction que la troisième distance dans la direction radiale de l'élément tubulaire allongé (5) et ladite quatrième distance étant plus grande que ladite troisième distance.

17. Le support multi-jambes réglable en hauteur (1) selon l'une quelconque des revendications 8 à 16, dans lequel le dispositif de verrouillage (6) comprend un élément de fixation (25a) et un troisième élément de polarisation (11c) qui est configuré et agencé dans une direction axiale de l'élément tubulaire allongé (5) par rapport au premier boîtier (9) pour maintenir l'élément de fixation (25a) au moins partiellement inséré dans une glissière de guidage de jambe respective (10a) du premier ensemble d'au moins trois glissières de guidage de jambe (10a, 10b, 10c, 10d) et ainsi en contact de butée avec le premier boîtier (9) et la partie allongée (4a) d'une jambe (4) des au moins trois jambes (2, 3, 4) qui est au moins partiellement entourée par la glissière de guidage de jambe respective (10a), l'élément de fixation (25a) étant configuré et agencé pour être déplaçable hors de la glissière de guidage de jambe respective (10a) dans au moins une direction axiale du élément tubulaire allongé (5) sous l'influence du premier élément de liaison (8) en réponse audit premier déplacement de l'élément de commande allongé (13).

18. Le support multi-jambes réglable en hauteur (1) selon l'une quelconque des revendications 1 à 17, dans lequel le dispositif de commande central (12) comprend un élément de commande (26) qui est interconnecté avec l'élément de commande allongé (13) via une unité de transmission (27), l'unité de transmission (27) étant configurée et agencée pour permettre le transfert:
- un premier déplacement de l'élément de commande (26) d'une première position de repos à une seconde position activée en réponse à une manipulation de l'élément de commande (26) par un utilisateur, dans ledit premier déplacement de l'élément de commande allongé (13) transférant ainsi le dispositif de verrouillage (6) de l'état de repos verrouillé à l'état déverrouillé; et
- ledit deuxième déplacement de l'élément de commande allongé (13), en l'absence de manipulation de l'élément de commande (26) par un utilisateur, dans un deuxième déplacement de l'élément de commande (26) de la deuxième position activée à la première position de repos transférant ainsi le dispositif de verrouillage (6) de l'état déverrouillé à l'état de repos verrouillé.

19. Une ensemble (100) comprenant un support multi-jambes réglable en hauteur (1) selon l'une quelconque des revendications 1 à 18.
